# EUROPEAN PATENT APPLICATION

(11) **EP 2 614 887 A1**
(43) Date of publication of application: **17.07.2013**
(21) Application number: 12150938.4
(22) Date of filing: 12.01.2012
(51) Int. Cl.: B01J 31/24, B01J 31/22, C08C 19/02

(54) **Ruthenium-based complex catalysts**

(71) Applicant: Lanxess Deutschland GmbH, 51369 Leverkusen (DE); University of Toronto, Toronto, ON M5G 1L7 (CA)
(72) Inventor: Müller, Julia, 5133 Gilgenberg (AT); Ong, Christopher, Orange, Texas 77632 (US); Wade, Douglas, Toronto, Ontario, M4V 3A5 (CA); Lund, Clinton, London, Ontario, N6H 0A7 (CA); Sgro, Michael, Toronto, Ontario, M5V 3Y3 (CA); Cariou, Renan, Hull HU1 1UJ (GB)

(57) **Abstract**

The present invention provides novel Ruthenium-based transition metal complex catalysts comprising specific ligands, their preparation and their use in hydrogenation processes. Such complex catalysts are inexpensive, thermally robust, and olefin selective.

## Description

### FIELD OF THE INVENTION

The present invention relates to novel Ruthenium-based transition metal complex catalysts, their preparation and their use in hydrogenation processes.

### BACKGROUND OF THE INVENTION

**In** Ind. Eng. Chem. Res. 1991, 30, 1086-1092**,** Macromolecules 1992, 25, 883-886**,** J. Mol. Catal. A:Chem. 1998, 135, 121-132 **and** Rubber Chem. Technol. 2008, 81, 227-243 the Rhodium-based catalyst tris(triphenylphosphine)rhodium(I)chloride of formula (1) is disclosed for hydrogenation and hydrosilylation reactions of rubbers. However, high costs are associated with this catalyst which additionally requires the use of triphenylphosphine as co-catalyst. The catalyst degrades at 145°C.

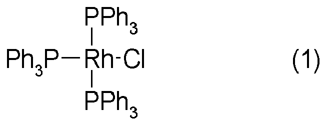

**In** Chem. Comm. 1967, 305-306**,** Chem. Eur. J. 2010, 16, 12214-12220 **and** Tetrahedron Lett. 1966, 4871-4875 it is disclosed that the complex tris(triphenylphosphine) hydrido ruthenium chloride of formula (2) can be used in a transfer hydrogenation for converting alkynes to alkenes. However, such catalyst does not efficiently hydrogenate nitrile rubbers and it is not selective for only olefins.

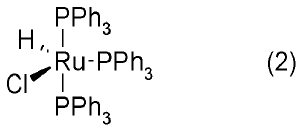

According to Organometallics 2004, 23, 86-94**,** the catalyst of formula (3) as shown below can be prepared from RuHCl(PPh₃)₃ and two equivalents of SIMes₂ with the formation of SIMes₂·HCl as a byproduct. However, no hydrogenation data is reported. It is not possible to displace PPh₃ with SIMes₂ without CH activation of the methyl groups.

**In** Organometallics 2006, 25, 99-110**,** Dalton Trans. 2008, 2603-2614**.** Organometallics 2009, 28, 1758-1775**.** Inorg. Chim Acta.2010, 363, 625-632 **and** Organometallics, 2010, 29, 5450-5455 the catalyst of formula (4) as shown below is prepared from RuHCl(CO)(AsPh₃)₃ and IMes₂. Such preparation method, however, is not favourable due to the presence of AsPh₃. The catalyst further contains a CO group. Such catalyst is described for transfer hydrogenation of aromatic ketones with alcohols. It also hydrogenates olefins and ketones using H₂, however, it is not selective for olefins.

**In** J. Am. Chem. Soc. 1961, 83,1262-1263**,** Chem. Eur. J. 2010,16,12214-12220**,** Am. Chem. Soc. 2010,132,16756-16758 **and** J. Mol. Catal. A:Chem. 2003, 206,13-21 the catalyst of formula (5) as shown below is used as a transfer hydrogenation catalyst for alkynes to alkenes and for hydrogenation of amides to alcohols and amines under H₂. However, such a catalyst is not selective for olefins and contains a CO group.

In Chemical Industries 2005,104, 125-134 the catalyst of formula (6) as shown below is described for the hydrogenation of rubbers. High costs, facile catalyst deactivation and low thermal stability are some of detrimental attributes of this catalyst.

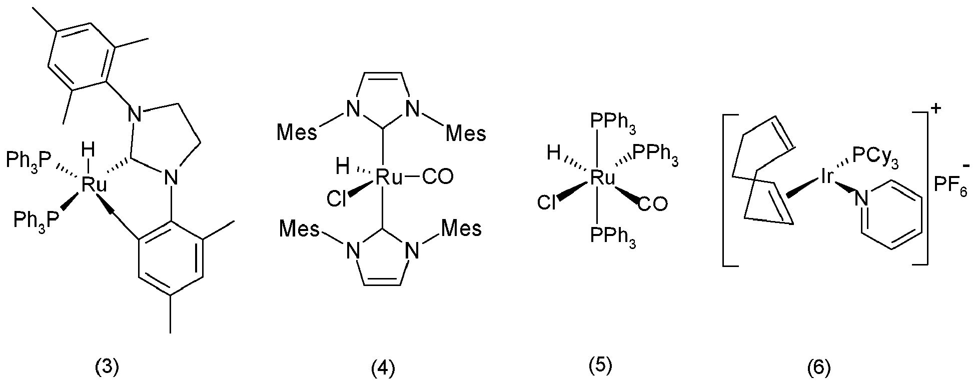

Summing up various catalysts are already available for hydrogenation reactions, however, many of them contain unfavourable ligands, are difficult to prepare and not sufficiently active and/or selective.

Therefore, it was the **object of the present invention** to provide an inexpensive, thermally robust, and olefin selective novel catalyst for hydrogenation reactions particularly for hydrogenating polymers and even more particularly for hydrogenating nitrile rubbers.

### SUMMARY OF THE INVENTION

The above-mentioned objects have now been solved by providing novel Ruthenium-based complex catalysts according to general formula (I) 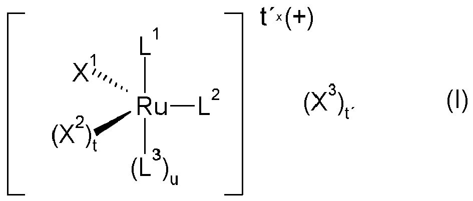 wherein
- X¹ and X²: are identical or different and represent anionic ligands,
- x³: represents a non-coordinating anion,
- t: is either 0 or 1,
- t': is either 0 or 1,
- u: is either 0 or 1, wherein u and t may not both represent 0 at the same time,
- L¹, L² and L³: represent identical or different ligands, wherein at least one of L¹, L² and (if u=1) L³ represents either a ligand having the general structure (Ia) or (Ib) 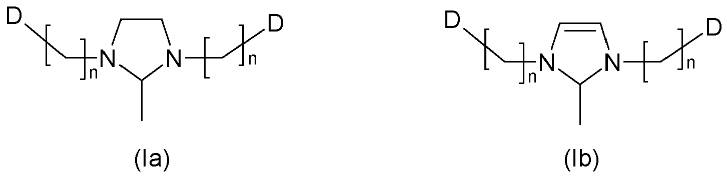 or a ligand having the general structure (Ic) or (Id) 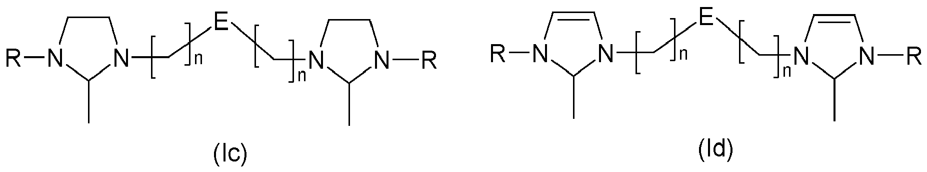 in which formulae (Ia), (Ib), (Ic) and (Id)
n is identical or different and represents an integer in the range of from 1 to 20,
D is identical or different and represents hydroxy, alkoxy, aryloxy, thiol, thiolate, thioether, selenol, selenoether, amine, phosphine, phosphate, phosphite, arsine, sulfoxide, sulfone, alkyl, phosphinimine, aminophosphine, carbene, selenoxide, imidazoline, imidazolidine, phosphine oxide, phosphine sulfide, phosphine selenide, ketone, ester, pyridyl, substituted pyridyl or any moiety able of acting as a two electron donor,
R is identical or different and represents H, alkyl or aryl, and
E is identical or different and represents a divalent moiety able of acting as a two electron donor selected from the group consisting of -O-, -S-, -Se-, -N(R)-, - P(R)-, -As(R)-, -S(=O)-. -PR(=S)-, -PR(=O)-, -C(=O)-, -C(=S)-, 2,6-pyridylene, substituted 2,6-pyridylene and any other divalent moiety able of acting as a two electron donor.

### DETAILED DESCRIPTION OF THE INVENTION

The novel Ruthenium-based catalysts are excellently suited for hydrogenation reactions, are thermally robust, use less expensive ruthenium as transition metal and more importantly are selective for olefin hydrogenation.

The term "substituted" used for the purposes of the present patent application means that a hydrogen atom on an indicated radical or atom has been replaced by one of the groups indicated in each case, with the proviso that the valency of the atom indicated is not exceeded and the substitution leads to a stable compound.

For the purposes of the present patent application and invention, all the definitions of radicals, parameters or explanations given above or below in general terms or in preferred ranges can be combined with one another in any way, i.e. including combinations of the respective ranges and preferred ranges.

### Ligand Definition:

In the catalysts of the general formula (I), **X¹ and X²** are identical or different and represent two anionic ligands.

**X¹** and **X²** can be, for example, hydride, halide, pseudohalide, alkoxide, amide, triflate, phosphate, borate, carboxylate, acetate, halogenated acetate, halogenated alkylsulfonate, tosylate or any weakly coordinating anionic ligands. **X¹** and **X²** can also be, for example, straight-chain or branched C₁-C₃₀-alkyl or C₆-C₂₄-aryl.

In a preferred embodiment, **X¹** and **X²** are identical or different and shall mean hydride, halide, in particular fluoride, chloride, bromide or iodide, phosphate, borate, carboxylate, acetate, trifluoroacetate, trifluormethylsulfonate or tosylate.

In a particularly preferred embodiment, **X¹** and **X²** are different and shall mean hydride or halide. In particular **X¹** and **X²** are different and represent hydride and chloride.

**X³** represents a non-coordinating anion acting as a counterion. It represents a counterion with a single negative charge or an equivalent thereof. In one embodiment **X³** can have the meaning (ER¹₄)⁻ in which E means B, Al, or Ga and R¹ are identical or different having the same meanings as outlined above for X¹ and X². **X³** represents e.g. BF₄⁻, ClO₄⁻, [B(3,5-(CF₃)₂C₆H₃)₄]⁻, B(C₆F₅)₄⁻, B(CF₃SO₃)₄⁻, B(RSO₃)⁻ (with R having the same meanings as defined above for structures (Ic) and (Id)) and Al(OC(CF₃)₃)₄⁻. In the alternative **X³** represents e.g. PF₆⁻ or AgBr₂⁻.

In the general formula (I), the symbols **L¹, L²** and **L³** represent identical or different ligands and are preferably uncharged electron donors with the following proviso: At minimum at least one of the ligands L¹, L² and (if u=1) L³ represents a ligand having the following structure (Ia) or (Ib) 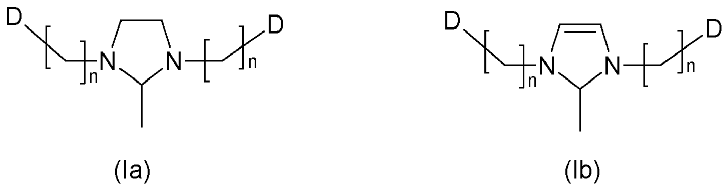 or a ligand having the structure (Ic) or (Id) 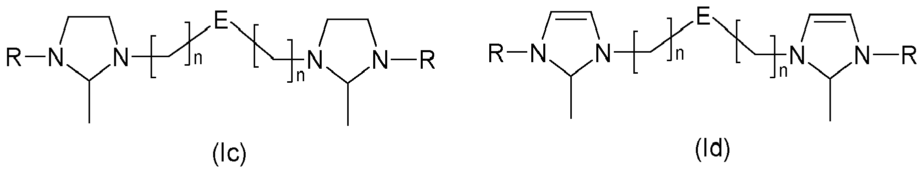 in which formulae (Ia), (Ib), (Ic) and (Id)
- n: is identical or different and represents an integer in the range of from 1 to 20
- D: is identical or different and represents hydroxy, alkoxy, aryloxy, thiol, thiolate, thioether, selenol, selenoether, amine, phosphine, phosphate, phosphite, arsine, sulfoxide, sulfone, alkyl, phosphinimine, aminophosphine, carbene, selenoxide, imidazoline, imidazolidine, phosphine oxide, phosphine sulfide, phosphine selenide, ketone, ester, pyridyl, substituted pyridyl, or any moiety able of acting as a two electron donor,
- R: is identical or different and represents H, alkyl, or aryl, and
- E: is identical or different and represents a divalent moiety able of acting as a two electron donor selected from the group consisting of -O-, -S-, -Se-, -N(R)-, -P(R)-, -As(R)-, -S(=O)-, -PR(=S)-, -PR(=O)-, -C(=O)-, -C(=S)-, 2,6-pyridinylene, substituted 2,6-pyridinylene and any other divalent moiety able of acting as a two electron donor.

In one embodiment of the novel catalysts the alkyl and aryl groups R can be substituted by one or more substituents, such substituents representing preferably straight-chain or branched C₁-C₁₀-alkyl, C₃-C₈-cycloalkyl, C₁-C₁₀-alkoxy or C₆-C₂₄-aryl, where these substituents may in turn be substituted by one or more functional groups, preferably functional groups selected from the group consisting of halide, C₁-C₅-alkyl, C₁-C₅-alkoxy, phenyl and substituted phenyl.

The ligands pursuant to formulae (Ia) and (Ib) may act as monodentate, but in some cases also as bi- or tridentate ligands depending on their structure as well as depending on the other ligands in the complex. The ligands pursuant to formulae (Ic) and (Id) may act as bidentate ligands, but in some cases also as tridentate ligands depending on their structure as well as depending on the other ligands in the complex.

In a **preferred embodiment** catalysts of the general formula (I) are provided in which at least one of the ligands L¹, L² and (if u=1) L³ represents a ligand having the structure (Ia) or (Ib) in which
- n: is identical or different and represents an integer in the range of from 1 to 10 and
- D: is identical or different and represents C₁-C₂₀ -alkoxy, C₆-C₂₄-aryloxy or C₁-C₁₀-thioether.

In a **more preferred embodiment** at least one of the ligands L¹, L² and (if u=1) L³ represents a ligand having the structure (Ia) or (Ib) in which
- n: is identical or different and represents an integer in the range of from 1 to 5, and
- D: is identical or different and represents C₁-C₁₀-alkoxy or C₆-C₁₄-aryloxy.

In a **particularly preferred embodiment** one ligand of L¹, L² and (if u=1) L³ has the formulae (Ia-1) or (Ib-1)

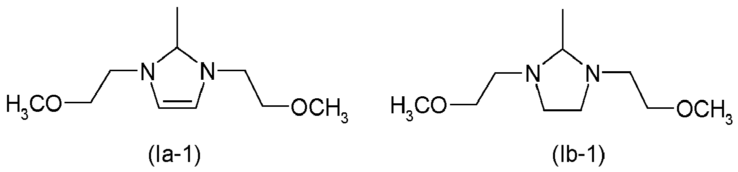

In another **preferred embodiment** at least one ligand of L¹ L² and (if u=1) L³ represents a ligand having the structure (Ic) or (Id) in which
- n: is identical or different and represents an integer in the range of from 1 to 10,
- E: is identical or different and represents oxygen or sulfur, and
- R: is identical or different and represents C₁-C₂₀-alkyl or C₆-C₂₄-aryl.

In a **more preferred embodiment** at least one ligand of L¹, L² and (if u=1) L³ represents a ligand having the structure (Ic) or (Id) in which
- n: is identical or different and represents an integer in the range of from 1 to 5,
- E: is identical or different and represents oxygen or sulfur, and
- R: is identical or different and represents C₁-C₁₀ alkyl or C₆-C₁₄ aryl.

In a **particularly preferred embodiment** one ligand of L¹, L² and (if u=1) L³ represents a tridentate ligand having the formula (Ic-1)

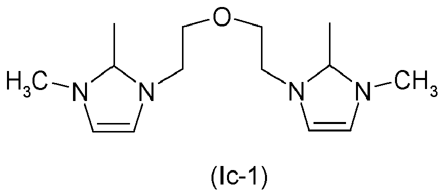

Apart from this proviso the remaining ligand(s) of L¹, L² and (if u=1) L³ can, for example, be, independently of one another and as long as they are different from the definitions according to formulae (Ia), (Ib), (Ic) and (Id) phosphine, sulfonated phosphine, substituted sulfonated phosphine, phosphine oxide, phosphine sulfide, phosphine selenide, phosphinimine, aminophosphine, phosphate, phosphinite, substituted phophinite, phosphonite, phosphite, substituted phosphite, arsine, substituted arsine, stibine, an amine, substituted amine, amide, sulfoxide, sulfone, carboxyl, nitrosyl, pyridine, substituted pyridine, alkyl, carbene, alkoxy, aryloxy, thiol, thioether, sulfoxide, selenol, selenoether, selenoxide, ketone, ester, an imidazoline or imidazolidine ligand other than the above or any other moiety able of acting as a two electron donor.

Under compliance with the above proviso preference is given to the remaining ligand(s) of L¹, L² and (if u=1) L³ being, independently of one another, a C₆-C₂₄-arylphosphine, C₁-C₁₀alkylphosphine or C₃-C₂₀-cycloalkylphosphine ligand, a sulfonated C₆-C₂₄-arylphosphine or sulfonated C₁-C₁₀-alkylphosphine ligand, a C₆-C₂₄-arylphosphinite or C₁-C₁₀-alkylphosphinite ligand, a C₆-C₂₄-arylphosphonite or C₁-C₁₀-alkylphosphonite ligand, a C₆-C₂₄-aryl phosphite or C₁-C₁₀-alkyl phosphite ligand, a C₆-C₂₄-arylarsine or C₁-C₁₀-alkylarsine ligand, a C₆-C₂₄-arylamine or C₁-C₁₀-alkylamine ligand, an optionally substituted pyridine ligand, a C₆-C₂₄-aryl sulfoxide or C₁-C₁₀-alkyl sulfoxide ligand, a C₆-C₂₄-aryloxy or C₁-C₁₀-alkyloxy ligand or a C₆-C₂₄-arylamide or C₁-C₁₀-alkylamide ligand, each of which may be substituted by a phenyl group which may in turn be substituted by a halogen-, C₁-C₅-alkyl or C₁-C₅-alkoxygroup.

The term "phosphine" includes, for example, PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na) P(isopropyl)₃, P(CHCH₃(CH₂CH₃))₃, P(cyclopentyl)₃, P(cyclohexyl)₃, P(neopentyl)₃ and P(benzyl)₃.

The term "phosphinite" includes, for example, phenyl diphenylphosphinite, cyclohexyl dicyclohexylphosphinite, isopropyl diisopropylphosphinite and methyl diphenylphosphinite.

The term "phosphite" includes, for example, triphenyl phosphite, tricyclohexyl phosphite, tri-tert-butyl phosphite, triisopropyl phosphite and methyl diphenyl phosphite.

The term "stibine" includes, for example, triphenylstibine, tricyclohexylstibine and trimethylstibine.

The term "sulphonate" includes, for example, trifluoromethanesulphonate, tosylate and mesylate.

The term "sulfoxide" includes, for example, (CH₃)₂S(=O) and (C₆H₅)₂S=O.

The term "thioether" includes, for example, CH₃SCH₃, C₆H₅SCH₃, CH₃OCH₂CH₂SCH₃ and tetrahydrothiophene.

For the purposes of the present application, the term "pyridine" is used as a collective term for all nitrogen-containing ligands as are mentioned by, for example, Grubbs in WO-A-03/011455. Examples are: pyridine, picolines (α-, β- and γ-picoline), lutidines (2,3-, 2,4-, 2,5-, 2,6-, 3,4- and 3,5-lutidine), collidine (2,4,6-trimethylpyridine), trifluoromethylpyridine, phenylpyridine, 4-(dimethylamino) pyridine, chloropyridines, bromopyridines, nitropyridines, quinoline, pyrimidine, pyrrole, imidazole and phenylimidazole.

If one or two of the remaining ligands of L¹, L² and (if u=1) L³ is/are an imidazoline or imidazolidine ligand other than the ligands having the formulae (Ia), (Ib), (Ic) or (Id), this imidazoline or imidazolidine ligand by definition usually has a structure corresponding to the general formulae (IIa), (IIb), or (IIc), 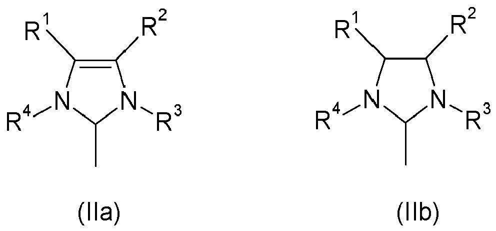 wherein, under the proviso that these ligands according to formulae (IIa) and (IIb) are different from the general formulae (Ia), (Ib), (Ic) and (Id),
- R¹ R², R³, R⁴: are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulphonyl, C₁-C₂₀-alkylsulphonate, C₆-C₂₀-arylsulphonate or C₁-C₂₀-alkylsulphinyl
or in the alternative
R³ and R⁴ have the above mentioned meanings and R¹ and R² jointly form a C₆-C₁₀ cyclic structure together with the two adjacent carbon atoms in the imidazoline or imidazolidine ring.

Again under the proviso that the ligands according to formulae (IIa) and (IIb) are different from the ligand structures (Ia), (Ib), (Ic), and (Id) one or more of the substituents R¹, R², R³, R⁴ can, if appropriate, independently of one another, be substituted by one or more substituents, preferably straight-chain or branched C₁-C₁₀-alkyl, C₃-C₈-cycloalkyl, C₁-C₁₀-alkoxy or C₆-C₂₄-aryl, where these abovementioned substituents may in turn be substituted by one or more functional groups, preferably functional groups selected from the group consisting of halogen, in particular chlorine or bromine, C₁-C₅-alkyl, C₁-C₅-alkoxy and phenyl.

Merely for the sake of clarity, it may be added that the structures of the imidazoline or imidazolidine ligands depicted in the general formulae (IIa) and (IIb) in the present application are equivalent to the structures (IIa'), and (IIb') which are frequently also found in the literature for this type of ligands and emphasize the carbene character of the imidazoline or imidazolidine ligand This applies analogously to the associated preferred structures (III-a)-(III-o) depicted below and to the structure (Ia), (Ib), (Ic) and (Id).

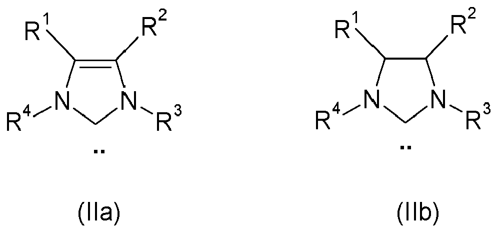

For all following preferred embodiments the same proviso as mentioned above shall apply, i.e. in any case the meanings of R¹, R², R³, R⁴ shall be chosen in a way that the imidazoline or imidazolidine ligands having the formulae (IIa) and (IIb) (or (IIa') and (IIb') and (III-a)-(III-o), respectively) must be different from the ligands having the formulae (Ia), (Ib), (Ic) or (Id).

In a preferred embodiment of the catalysts of the general formula (I), R¹ and R² are each, independently of one another, hydrogen, C₆-C₂₄-aryl, particularly preferably phenyl, straight-chain or branched C₁-C₁₀-alkyl, particularly preferably propyl or butyl, or together with the carbon atoms to which they are bound form a C₆-C₁₀ cycloalkyl or C₆-C₁₀ aryl substituent, preferably a phenyl ring in structure (IIa) (structure (IIa') respectively) where all the above mentioned substituents may in turn be substituted by one or more further substituents selected from the group consisting of straight-chain or branched C₁-C₁₀-alkyl, C₁-C₁₀-alkoxy, C₆-C₂₄-aryl and a functional group selected from the group consisting of hydroxy, thiol, thioether, ketone, aldehyde, ester, ether, amine, imine, amide, nitro, carboxylic acid, disulphide, carbonate, isocyanate, carbodiimide, carboalkoxy, carbamate and halogen.

In a preferred embodiment of the catalysts of the general formula (I), the substituents R³ and R⁴ are identical or different and are each straight-chain or branched C₁-C₁₀-alkyl, particularly preferred i-propyl or neopentyl, C₃-C₁₀-cycloalkyl, particularly preferred adamantyl, C₆-C₂₄-aryl, particularly preferred phenyl, C₁-C₁₀-alkylsulphonate, particularly preferred methanesulphonate, C₆-C₁₀-arylsulphonate, particularly preferred p-toluenesulphonate.

The abovementioned substituents as meanings of R³ and R⁴ may be substituted by one or more further substituents selected from the group consisting of straight-chain or branched C₁-C₅-alkyl, in particular methyl, C₁-C₅-alkoxy, optionally substituted aryl and a functional group selected from the group consisting of hydroxy, thiol, thioether, ketone, aldehyde, ester, ether, amine, imine, amide, nitro, carboxylic acid, disulphide, carbonate, isocyanate, carbodiimide, carboalkoxy, carbamate and halogen.

In particular, the substituents R³ and R⁴ can be identical or different and are each 1-propyl, neopentyl, adamantyl, mesityl or 2,6-diisopropylphenyl.

Particularly preferred imidazoline or imidazolidine ligands have the following structures (III-a) to (III-o), where Ph is in each case a phenyl substituent, Bu is a butyl substituent, Mes is in each case a 2,4,6-trimethylphenyl substituent and (iPr)₂Ph is in all cases 2,6-diisopropylphenyl.

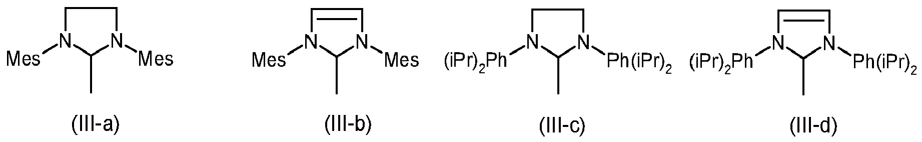

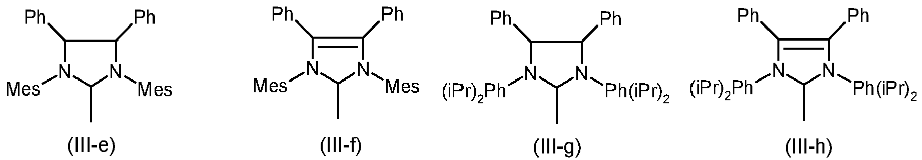

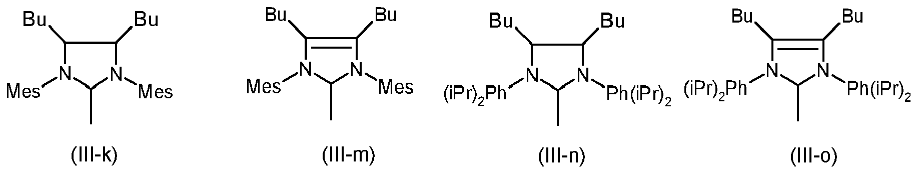

**Definition of preferred catalysts:**
A **preferred** catalyst has the general formula (I) in which
   - X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
   one ligand of L¹, L², and (if u=1) L³ has the general structure according to **formulae (Ia) or (Ib),**
   wherein
   - n: is identical or different and represents an integer in the range of from 1 to 20,
   - D: is identical or different and represents hydroxy, alkoxy, aryloxy, thiolate, thiol, thioether, selenol, selenoether, amine, phosphine, phosphate, phosphite, arsine, sulfoxide, sulfone, alkyl, phosphinimine, aminophosphine, carbene, selenoxide, imidazoline, imidazolidine, phosphine oxide, phosphine sulfide, phosphine selenide, ketone, ester, pyridyl, substituted pyridyl, or any other moiety able of acting as a two electron donor,
   with the remainder ligand(s) of L¹, L², and (if u=1) L³ being (a) ligand/ligands different from the one of formulae (Ia) and (Ib) and X³, u, t and t' having the meanings outlined for general formula (I).
A **more preferred** catalyst has the general formula (I) in which
   - X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
   one ligand of L¹, L², and (if u=1) L³ has the general structure according to **formulae (Ia) or (Ib),**
   wherein
   - n: is identical or different and represents an integer in the range of from 1 to 10,
   - D: is identical or different and represents C₁-C₂₀-alkoxy, C₆-C₂₄-aryloxy or C₁-C₁₀-thioether,
   with the remainder ligand(s) of L¹, L², and (if u=1) L³ being a ligand/ligands different from the one of formulae (Ia) and (Ib) and X³, u, t and t' having the meanings outlined for general formula (I).

Another **very preferred** catalyst has the general formula (I) in which
- X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹, L², and (if u=1) L³ has the general structure according to f**ormulae (Ia) or (Ib),**
wherein n is identical or different and represents an integer in the range of from 1 to 10, D is identical or different and represents C₁-C₂₀-alkoxy, C₆-C₂₄-aryloxy or C₁-C₁₀-thioether,
with the remainder ligand(s) of L¹, L², and (if u=1) L³ being independently of one another, a C₆-C₂₄-arylphosphine, C₁-C₁₀-alkylphosphine or C₃-C₂₀-cycloalkylphosphine ligand, a sulfonated C₆-C₂₄-arylphosphine or sulfonated C₁-C₁₀-alkylphosphine ligand, a C₆-C₂₄-arylphosphinite or C₁C₁₀-alkylphosphinite ligand, a C₆-C₂₄-arylphosphonite or C₁-C₁₀-alkylphosphonite ligand, a C₆-C₂₄-aryl phosphite or C₁-C₁₀-alkyl phosphite ligand, a C₆-C₂₄-arylarsine or C₁-C₁₀-alkylarsine ligand, a C₆-C₂₄-arylamine or C₁-C₁₀-alkylamine ligand, an optionally substituted pyridine ligand, a C₆-C₂₄-aryl sulfoxide or C₁-C₁₀-alkyl sulfoxide ligand, a C₆-C₂₄-aryloxy or C₁-C₁₀-alkyloxy ligand or a C₆-C₂₄-arylamide or C₁-C₁₀-alkylamide ligand, each of which may be substituted by a phenyl group which may in turn be substituted by a halogen-, C₁-C₅-alkyl or C₁-C₅-alkoxygroup, and
X³, u, t and t' having the meanings outlined for general formula (I).

An **even more preferred** catalyst has the general formula (I) in which
- X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or any weakly coordinating anion,
one ligand of L¹, L², and (if u=1) L³ has the general structure according to **formulae (Ia) or (Ib),**
wherein
- n: is identical or different and represents an integer in the range of from 1 to 5,
- D: is identical or different and represents C₁-C₁₀ alkoxy or C₆-C₁₄ aryloxy,
with the remainder ligand(s) of L¹, L², and (if u=1) L³ being a ligand/ligands different from the one of formulae (Ia) and (Ib), preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃,P(cyclopentyl)₃, P(cyclohexyl)₃, P(neopentyl)₃ and P(benzyl)₃, and X³, u, t and t' having the meanings outlined for general formula (I).

A **particularly preferred catalyst** has the general formula (I) in which
- X¹ and X²: are different and hydride and halide, most preferably chloride,
one ligand of L¹, L², and (if u=1) L³ has the general structure according to **formulae (Ia) or (Ib),**
wherein
- n: is identical or different and represents an integer in the range of from 1 to 5,
- D: is identical or different and represents C₁-C₁₀ alkoxy or C₆-C₁₄ aryloxy,
with the remainder ligand(s) of L¹, L², and (if u=1) L³ being a ligand/ligands different from the one of formulae (Ia) and (Ib), preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃, and X³, u, t and t' having the meanings outlined for general formula (I).

Another **particularly preferred** catalyst has the general formula (I) in which
- X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or any weakly coordinating anion,
one ligand of L¹, L², and (if u=1) L³ has the general structure according to formulae **(Ia-1) or (Ib-1)** 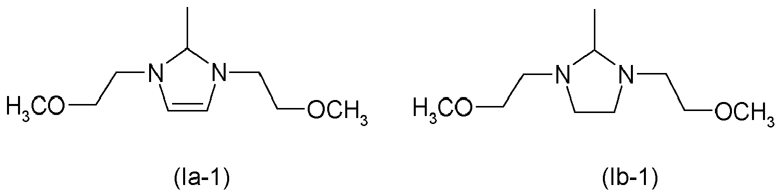 with the remainder ligand(s) of L¹, L², and (if u=1) L³ being a ligand/ligands different from the one of formulae (Ia) and (Ib), preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃, and X³, u, t and t' having the meanings outlined for general formula (I).

Another **preferred** catalyst has the general formula (I) in which
- X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹, L², and (if u=1) L³ has the general structure according to **general structure (Ic) or (Id)** wherein n is identical or different and represents an integer in the range of from 1 to 20, R is identical or different and represents H, alkyl or aryl, and E is identical or different and represents a divalent moiety able of acting as a two electron donor selected from the group consisting of -O-, -S-, -Se-, -N(R)-, - P(R)-, -As(R)-, -S(=O)-. -PR(=S), -PR(=O)-, -C(=O)-, -C(=S)-, 2,6- pyridylene, substituted 2,6-pyridylene and any other divalent moiety able of acting as a two electron donor.
with the remainder ligand(s) of L¹, L², and (if u=1) L³ being a ligand/ligands different therefrom, and X³, u, t and t' having the meanings outlined for general formula (I).

Another **more preferred** catalyst has the general formula (I) in which
- X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹, L², and (if u=1) L³ has the general structure according to **general structure (Ic) or (Id)** wherein
- n: is identical or different and represents an integer in the range of from 1 to 10,
- R: is identical or different and represents C₁-C₂₀-alkyl or C₆-C₁₄-aryl,
- E: is identical or different and represents oxygen or sulfur, and
with the remainder ligand(s) of L¹, L², and (if u=1) L³ being a ligand/ligands different therefrom and X³, u, t and t' having the meanings outlined for general formula (I).

Another **very preferred** catalyst has the general formula (I) in which
- X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹ L², and (if u=1) L³ has the general structure according to **general structure (Ic) or (Id)** wherein
- n: is identical or different and represents an integer in the range of from 1 to 10,
- R: is identical or different and represents C₁-C₂₀-alkyl or C₆-C₁₄-aryl,
- E: is identical or different and represents oxygen or sulfur, and
with the remainder ligand(s) of L¹, L², and (if u=1) L³ being independently of one another, a C₆-C₂₄-arylphosphine, C₁-C₁₀-alkylphosphine or C₃-C₂₀-cycloalkylphosphine ligand, a sulfonated C₆-C₂₄-arylphosphine or sulfonated C₁-C₁₀-alkylphosphine ligand, a C₆-C₂₄-arylphosphinite or C₁-C₁₀-alkylphosphinite ligand, a C₆-C₂₄-arylphosphonite or C₁-C₁₀-alkylphosphonite ligand, a C₆-C₂₄-aryl phosphite or C₁-C₁₀-alkyl phosphite ligand, a C₆-C₂₄-arylarsine or C₁-C₁₀-alkylarsine ligand, a C₆-C₂₄-arylamine or C₁-C₁₀-alkylamine ligand, an optionally substituted pyridine ligand, a C₆-C₂₄-aryl sulfoxide or C₁-C₁₀-alkyl sulfoxide ligand, a C₆-C₂₄-aryloxy or C₁-C₁₀-alkyloxy ligand or a C₆-C₂₄-arylamide or C₁-C₁₀-alkylamide ligand, each of which may be substituted by a phenyl group which may in turn be substituted by a halogen-, C₁-C₅-alkyl or C₁-C₅-alkoxygroup, and
X³, u, t and t' having the meanings outlined for general formula (I).

Another **even more preferred** catalyst has the general formula (I) in which
- X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly anionic coordinating or non-coordinating anion,
one ligand of L¹, L², and (if u=1) L³ has the general structure according to **general structure (Ic) or (Id)** wherein
- n: is identical or different and represents an integer in the range of from 1 to 5,
- R: is identical or different and represents C₁-C₁₀ alkyl or C₆-C₁₄ aryl,
- E: is identical or different and represents oxygen, sulfur, and
with the remainder ligand(s) of L¹, L², and (if u=1) L³ being a ligand/ligands different therefrom, preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃, and X³, u, t and t' having the meanings outlined for general formula (I).

A p**articularly preferred catalyst** has the general formula (I) in which
- X¹ and X²: are different and hydride and halide, most preferably chloride,
one ligand of L¹, L², and (if u=1) L³ has the general structure according to **general structure (Ic) or (Id)** wherein
- n: is identical or different and represents an integer in the range of from 1 to 5,
- R: is identical or different and represents C₁-C₁₀ alkyl or C₆-C₁₄ aryl,
- E: is identical or different and represents oxygen, sulfur, and
with the remainder ligand(s) of L¹, L², and (if u=1) L³ being a ligand/ligands different therefrom, preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃, and X³, u, t and t' having the meanings outlined for general formula (I).

Another **particularly preferred** catalyst has the general formula (I) in which
- X¹ and X²: are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly anionic coordinating or non-coordinating anion,
one ligand of L¹, L², and (if u=1) L³ has the general structure according formula (Ic-1) 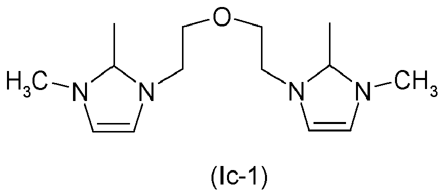 with the remainder ligand(s) of L¹, L², and (if u=1) L³ being a ligand/ligands different therefrom, preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃, and X³, u, t and t' having the meanings outlined for general formula (I).

The present invention provides catalysts of the above general formula (I) as well as all preferred, more preferred and most preferred structures thereof also shown above with the following three alternatives: (i) with u=0 and at the same time t=1, or (ii) with u=1 and at the same time t=0, or (iii) with u=1 and at the same time t=1.

In order to prepare the catalysts according to general formula (I) and all preferred, more preferred and most preferred catalysts a person skilled in the art can use multistep procedures as outlined and exemplified in the experimental section of this application for various catalysts and can apply, generalize and modify to the extent necessary such described procedures to prepare catalysts falling under general formula (I). The preparation methods typically include schlenk or glovebox techniques. The characterization of the catalysts, substrates and compounds e.g. by ¹H-, ¹³C-, ¹⁹F-, ³¹P-, or ¹¹B-NMR, elemental analysis, and ESI-MS as outlined in the experimental section of this application are routine to a person skilled in the art of synthetic chemistry.

**The present invention further relates** to a process of hydrogenating substrates possessing at least one carbon-carbon double bond comprising subjecting said substrate to a hydrogenation reaction in the presence of a catalyst according to general formula (I).

### Substrates to be hydrogenated:

The process of the present invention is broadly applicable to the hydrogenation of a variety of substrates, including terminal olefins, internal olefins, cyclic olefins, conjugated olefins, and any further olefins having at least one carbon-carbon double bond and additionally at least one further polar unsaturated double or triple bond. The process is also applicable to the hydrogenation of polymers having carbon-carbon double bonds. Such polymers may represent homo-, co- or terpolymers.

As **a terminal olefin or alkene**, it is possible to hydrogenate a hydrocarbon compound with a terminal unsaturated carbon-carbon double bond having the general formula CₙH₂ₙ. The terminal olefin can be a straight-chain or a branched hydrocarbon compound of any length, preferably 1-hexene.

As an **internal olefin or alkene**, it is possible to hydrogenate a hydrocarbon compound with an internal unsaturated carbon-carbon double bond having the general formula CₙH₂ₙ. The internal olefin can be a straight-chain or a branched hydrocarbon of any length, preferably 2-hexene.

As a **cyclic olefin or cycloalkene**, it is possible to hydrogenate a hydrocarbon compound with a cyclic unsaturated carbon-carbon double bond having the general formula CₙH₂ₙ₋₂. The cyclic olefin can be a ring of any size, preferably cyclohexene.

As a **conjugated olefin or dialkene**, it is possible to hydrogenate a hydrocarbon compound with conjugated carbon-carbon unsaturated double bonds. The conjugation can be a straight-chain or a branched hydrocarbon of any length, preferably styrene.

As an olefin, it is also possible to selectively hydrogenate a **hydrocarbon compound with at least one unsaturated carbon-carbon double bond and least one other unsaturated polar double or triple bond**. Such unsaturated polar bonds are surprisingly left unaltered. The carbon-carbon double bond in such olefins can be of any nature including terminal, internal, cyclic and conjugated ones. The additional unsaturated polar bond can be of any nature with preference given to carbon-nitrogen, carbon-phosphorus, carbon-oxygen, and carbon-sulfur unsaturated polar bonds.

**Polymers having carbon-carbon double bond**s may also be subjected to the inventive process. Such polymers preferably comprise repeating units based on at least one conjugated diene monomer.

The conjugated diene can be of any nature. In one embodiment (C₄-C₆) conjugated dienes are used. Preference is given to 1,3-butadiene, isoprene, 1-methylbutadiene, 2,3-dimethylbutadiene, piperylene, chloroprene, or mixtures thereof. More preference is given to 1,3-butadiene, isoprene or mixtures thereof. Particular preference is given to 1,3-butadiene.

In a further embodiment polymers having carbon-carbon double bonds may be subjected to the inventive process which comprise repeating units of not only at least one conjugated diene as monomer (a) but additionally at least one further copolymerizable monomer (b).

Examples of suitable monomers (b) are olefins, such as ethylene or propylene.

Further examples of suitable monomers (b) are vinylaromatic monomers, such as styrene, alpha-methyl styrene, o-chlorostyrene or vinyltoluenes, vinylesters of aliphatic or branched C₁-C₁₈ monocarboxylic acids, such as vinyl acetate, vinyl propionate, vinyl butyrate, vinyl valerate, vinyl hexanoate, vinyl 2-ethylhexanoate, vinyl decanoate, vinyl laurate and vinyl stearate.

A preferred polymer to be used in the present invention is a copolymer of 1,3-butadiene and styrene or alpha-methylstyrene. Said copolymers may have a random or block type structure.

Further examples of suitable monomers (b) are esters of ethylenically unsaturated monocarboxylic acids or mono- or diesters of dicarboxylic acids with generally C₁-C₁₂ alkanols, e.g. esters of acrylic acid, methacrylic acid, maleic acid, fumaric acid and itaconic acid with e.g. methanol, ethanol, n-propanol, isopropanol, 1-butanol, 2-butanol, isobutanol, tert.-butanol, n-hexanol, 2-ethylhexanol, or C₅-C₁₀-cycloalkanols, such as cyclopentanol or cyclohexanol, and of these preferably the esters of acrylic and/or methacrylic acid, examples being methyl methacrylate, n-butyl methacrylate, tert-butyl methacrylate, n-butyl acrylate, tert-butyl acrylate, and 2-ethylhexyl acrylate.

The inventive process may be further used to hydrogenate so-called nitrile rubbers. Nitrile rubbers ("NBR") represent copolymers or terpolymers containing repeating units of at least one conjugated diene, at least one α,β-unsaturated nitrile monomer and, if appropriate, one or more further copolymerizable monomers.

The conjugated diene in such nitrile rubbers can be of any nature. Preference is given to using (C₄-C₆)-conjugated dienes. Particular preference is given to 1,3-butadiene, isoprene, 2,3-dimethylbutadiene, piperylene or mixtures thereof. In particular, use is preferably made of 1,3-butadiene or isoprene or mixtures thereof. Very particular preference is given to 1,3-butadiene.

As α,β-unsaturated nitrile monomer, it is possible to use any known α,β-unsaturated nitrile, with preference being given to (C₃-C₅)-α,β-unsaturated nitriles such as acrylonitrile, methacrylonitrile, ethacrylonitrile or mixtures thereof. Particularly preference is given to acrylonitrile.

A particularly preferred nitrile rubber to be subjected to hydrogenation according to the invention is thus a copolymer of acrylonitrile and 1,3-butadiene.

In addition to the conjugated diene and the α,β-unsaturated nitrile, it is possible to use one or more further copolymerizable monomers known to those skilled in the art, e.g. termonomers containing carboxyl groups, like α,β-unsaturated monocarboxylic acids, their esters or amides, α,β-unsaturated dicarboxylic acids, their monoesters or diesters, or their corresponding anhydrides or amides.

As α,β-unsaturated monocarboxylic acids it is possible to use acrylic acid and methacrylic acid.

It is also possible to employ esters of the α,β-unsaturated monocarboxylic acids, preferably their alkyl esters and alkoxyalkyl esters. Preference is given to the alkyl esters, especially C₁-C₈ alkyl esters, of the α,β-unsaturated monocarboxylic acids, Particular preference is given to alkyl esters, especially C₁-C₁₈ alkyl esters, of acrylic acid or of methacrylic acid, more particularly methyl acrylate, ethyl acrylate, propyl acrylate, n-butyl acrylate, tert-butyl acrylate, 2-ethylhexyl acrylate, n-dodecyl acrylate, methyl methacrylate, ethyl methacrylates, butyl methacrylate and 2-ethylhexyl methacrylate. Also preferred are alkoxyalkyl esters of the α,β-unsaturated monocarboxylic acids, more preferably alkoxyalkyl esters of acrylic acid or of methacrylic acid, more particular C₂-C₁₂ alkoxyalkyl esters of acrylic acid or of methacrylic acid, very preferably methoxymethyl acrylate, methoxyethyl (meth)acrylate, ethoxyethyl (meth)acrylate and methoxyethyl (meth)acrylate. Use may also be made of mixtures of alkyl esters, such as those mentioned above, for example, with alkoxyalkyl esters, in the form of those mentioned above, for example. Use may also be made of cyanoalkyl acrylate and cyanoalkyl methacrylates in which the C atom number of the cyanoalkyl group is 2-12, preferably α-cyanoethyl acrylate, β-cyanoethyl acrylate and cyanobutyl methacrylate. Use may also be made of hydroxyalkyl acrylates and hydroxyalkyl methacrylate in which the C atom number of the hydroxyalkyl groups is 1-12, preferably 2-hydroxyethyl acrylate, 2-hydroxyethyl methacrylate and 3-hydroxypropyl acrylate; use may also be made of fluorine-substituted benzyl-group-containing acrylates or methacrylates, preferably fluorobenzyl acrylate, and fluorobenzyl methacrylate. Use may also be made of acrylates and methacrylates containing fluoroalkyl groups, preferably trifluoroethyl acrylate and tetrafluoropropyl methacrylate. Use may also be made of α,β-unsaturated carboxylic esters containing amino groups, such as dimethylaminomethyl acrylate and diethylaminoethyl acrylate.

As copolymerizable monomers it is possible, furthermore, to use α,β-unsaturated dicarboxylic acids, preferably maleic acid, fumaric acid, crotonic acid, itaconic acid, citraconic acid and mesaconic acid. Use may be made, furthermore, of α,β-unsaturated dicarboxylic anhydrides, preferably maleic anhydride, itaconic anhydride, citraconic anhydride and mesaconic anhydride.

It is possible, furthermore, to use monoesters or diesters of α,β-unsaturated dicarboxylic acids.

These α,β-unsaturated dicarboxylic monoesters or diesters may be, for example, alkyl esters, preferably C₁-C₁₀ alkyl, more particularly ethyl, n-propyl, isopropyl, n-butyl, tert-butyl, n-pentyl or n-hexyl esters, alkoxyalkyl esters, preferably C₂-C₁₂ alkoxyalkyl, more preferably C₃-C₈- alkoxyalkyl, hydroxyalkyl, preferably C₁-C₁₂ hydroxyalkyl, more preferably C₂-C₈ hydroxyalkyl, cycloalkyl esters, preferably C₅-C₁₂ cycloalkyl, more preferably C₆-C₁₂ cycloalkyl, alkylcycloalkyl esters, preferably C₆-C₁₂ alkylcycloalkyl, more preferably C₇-C₁₀ alkylcycloalkyl, aryl esters, preferably C₆-C₁₄ aryl esters, these esters being monoesters or diesters, and it also being possible, in the case of the diesters, for the esters to be mixed esters.

Particularly preferred alkyl esters of α,β-unsaturated monocarboxylic acids are methyl (meth)acrylate, ethyl (meth)acrylate, propyl (meth)acrylate, n-butyl (meth)acrylate, t-butyl (meth)acrylate, hexyl (meth)acrylate, 2-ethylhexyl (meth)acrylate, octyl (meth)acrylate, 2-propylheptyl acrylate and lauryl (meth)acrylate. More particularly, n-butyl acrylate is used.

Particularly preferred alkoxyalkyl esters of the α,β-unsaturated monocarboxylic acids are methoxyethyl (meth)acrylate, ethoxyethyl (meth)acrylate and methoxyethyl (meth)acrylate. More particularly, methoxyethyl acrylate is used.

Particularly preferred hydroxyalkyl esters of the α,β-unsaturated monocarboxylic acids are hydroxyethyl (meth)acrylate, hydroxypropyl (meth)acrylate and hydroxybutyl (meth)acrylate.

Other esters of the α,β-unsaturated monocarboxylic acids that are used are additionally, for example, polyethylene glycol (meth)acrylate, polypropylene glycol (meth)acrylate, glycidyl (meth)acrylate, epoxy (meth)acrylate, N-(2-hydroxyethyl)acrylamides, N-(2-hydroxymethyl)acrylamides and urethane (meth)acrylate.

Examples of α,β-unsaturated dicarboxylic monoesters encompass
- maleic acid monoalkyl esters, preferably monomethyl maleate, monoethyl maleate, monopropyl maleate and mono-n-butyl maleate;
- maleic acid monocycloalkyl esters, preferably monocyclopentyl maleate, monocyclohexyl maleate and monocycloheptyl maleate;
- maleic acid monoalkyl cycloalkyl esters, preferably monomethyl cyclopentyl maleate and monoethyl cyclohexyl maleate;
- maleic acid monoaryl esters, preferably monophenyl maleate;
- maleic acid monobenzyl esters, preferably monobenzyl maleate;
- fumaric acid monoalkyl esters, preferably monomethyl fumarate, monoethyl fumarate, monopropyl fumarate and mono-n-butyl fumarate;
- fumaric acid monocycloalkyl esters, preferably monocyclopentyl fumarate, monocyclohexyl fumarate and monocycloheptyl fumarate;
- fumaric acid monoalkyl cycloalkyl esters, preferably monomethyl cyclopentyl fumarate and monoethyl cyclohexyl fumarate;
- fumaric acid monoaryl esters, preferably monophenyl fumarate;
- fumaric acid monobenzyl esters, preferably monobenzyl fumarate;
- citraconic acid monoalkyl esters, preferably monomethyl citraconate, monoethyl citraconate, monopropyl citraconate and mono-n-butyl citraconate;
- citraconic acid monocycloalkyl esters, preferably monocyclopentyl citraconate, monocyclohexyl citraconate and monocycloheptyl citraconate;
- citraconic acid monoalkyl cycloalkyl esters, preferably monomethyl cyclopentyl citraconate and monoethyl cyclohexyl citraconate;
- citraconic acid monoaryl esters, preferably monophenyl citraconate;
- citraconic acid monobenzyl esters, preferably monobenzyl citraconate;
- itaconic acid monoalkyl esters, preferably monomethyl itaconate, monoethyl itaconate, monopropyl itaconate and mono-n-butyl itaconate;
- itaconic acid monocycloalkyl esters, preferably monocyclopentyl itaconate, monocyclohexyl itaconate and monocycloheptyl itaconate;
- itaconic acid monoalkyl cycloalkyl esters, preferably monomethyl cyclopentyl itaconate and monoethyl cyclohexyl itaconate;
- itaconic acid monoaryl esters, preferably monophenyl itaconate;
- itaconic acid monobenzyl esters, preferably monobenzyl itaconate.
- Mesaconic acid monoalkyl esters, preferably mesaconic acid monoethyl esters;

As α,β-unsaturated dicarboxylic diesters it is possible to use the analogous diesters based on the abovementioned monoester groups, and the ester groups may also be chemically different groups.

Preferably the substrate to be hydrogenated is a nitrile rubber comprising repeating units of at least one conjugated diene, at least one α,β-unsaturated nitrile and, if appropriate, one or more further copolymerizable monomers, preferably a nitrile rubber comprising repeating units of at least one conjugated diene selected from the group consisting of 1,3-butadiene, isoprene, 2,3-dimethylbutadiene, piperylene and mixtures thereof, at least one α,β-unsaturated nitrile selected from the group consisting of acrylonitrile, methacrylonitrile, ethacrylonitrile and mixtures thereof, and optionally of one or more further copolymerizable monomers selected from the group consisting of α,β-unsaturated monocarboxylic, dicarboxylic acids, their esters or amides.

The proportions of conjugated diene and α,β-unsaturated nitrile monomer in the NBR polymers to be used can vary within wide ranges. The proportion of the conjugated diene or the sum of conjugated dienes is usually in the range from 40 to 90% by weight, preferably in the range from 50 to 85% by weight, based on the total polymer. The proportion of the α,β-unsaturated nitrile or the sum of the α,β-unsaturated nitriles is usually from 10 to 60% by weight, preferably from 15 to 50% by weight, based on the total polymer. The proportions of the monomers in each case add up to 100% by weight. The additional monomers can be present in amounts of from 0 to 40% by weight, preferably from 0.1 to 40% by weight, particularly preferably from 1 to 30% by weight, based on the total polymer. In this case, corresponding proportions of the conjugated diene or dienes and/or the α,β-unsaturated nitrile or nitriles are replaced by the proportions of the additional monomers, with the proportions of all monomers in each case adding up to 100% by weight.

The preparation of such nitrile rubbers by polymerization of the abovementioned monomers is adequately known to those skilled in the art and is comprehensively described in the literature.

Nitrile rubbers which can be used for the purposes of the invention are commercially available, e.g. as products marketed under the trademarks Perbunan^{®} and Krynac^{®} by Lanxess Deutschland GmbH.

The nitrile rubbers which can be used for the hydrogenation have a Mooney viscosity (ML 1+4 at 100°C) in the range from 30 to 70, preferably from 30 to 50. This corresponds to a weight average molecular weight M_{w} in the range 150 000 - 500 000, preferably in the range 180 000 - 400 000. The nitrile rubbers used typically have a polydispersity PDI = M_{w}/Mₙ (Mₙ is the number average molecular weight) in the range of 2.0 - 6.0 and preferably in the range 2.0 - 4.0.

Hydrogenated nitrile rubbers obtained pursuant to this invention can have a Mooney viscosity (ML 1+4 at 100°C) in the range of greater than 0 up to 150, tyically the Mooney viscosity lies in the range of from 5 to 150, preferably of from 10 to 120, more preferably of from 30 to 110, even more preferably of from 35 to 100, and particularly preferably of from 50 to 100 and most preferably of from 60 to 90. The determination of the Mooney viscosity is carried out in accordance with ASTM standard D 1646.

They typically have a polydispersity PDI = M_{w}/Mₙ, where M_{w} is the weight average molecular weight and Mₙ is the number average molecular weight, in the range of 1.5 to 6 and preferably in the range of 1.8 to 4

### Hydrogenation conditions:

The process of the present invention is generally carried out at a temperature in the range from 0°C to 200°C, preferably in the range from 15°C to 150°C. This means that the process may be carried out at mild conditions. In case low molecular weight olefins like terminal olefins, internal olefins, cyclic olefins, conjugated olefins, or any other olefins having at least one carbon-carbon double bond and additionally at least one further polar unsaturated double bond are subjected to hydrogenation, the temperature typically lies in the range from 20 to 100 °C. In case polymers with double bonds in the polymer backbone are used as substrates the hydrogenation temperature typically lies in a range from 40 to 200°C, preferably in the range from 70 to 150 °C.

The hydrogenation process of the present invention is preferably carried out with hydrogen gas at a pressure from 0,1 to 20 MPa, preferably at a pressure from 1 to 16 MPa. In one embodiment of the present process said hydrogen gas is essentially pure.

Preferably the hydrogenation process is carried out at a temperature in the range from 0°C to 200°C with hydrogen gas at a pressure from 0,1 to 20 MPa, preferably at a temperature in the range from 15°C to 150°C with hydrogen gas at a pressure from 1 to 16 MPa..

The amount of catalyst according to general formula (I) can vary in a broad range. Typically the catalyst according to general formula (I) is used in a molar ratio from (0.01-0.20): 1, preferably from (0.01-0.05): 1 based on the substrate to be hydrogenated.

In the hydrogenation of rubber polymers the amount of catalyst according to formula (I) may also vary in a broad range. The amount of catalyst is then calculated on a weight base ratio in "phr" (parts per hundred rubber). Typically 0.005 phr to 2.5 phr catalyst are used based on the rubber. Preferably 0.01 phr to 2 phr and more preferably 0.025 phr to 2 phr catalyst are used based on the rubber.

The hydrogenation can be carried out in a suitable solvent which does not deactivate the catalyst used and also does not adversely affect the reaction in any other way. Preferred solvents include but are not restricted to methanol, chlorobenzene, bromobenzene, dichloromethane, benzene, toluene, methyl ethyl ketone, acetone, tetrahydrofuran, tetrahydropyran, dioxane and cyclohexane. The particularly preferred solvent is chlorobenzene. In some cases, when the substrate to be hydrogenated itself can function as solvent, e.g. in the case of 1-hexene, the addition of a further additional solvent can also be omitted.

According to the present invention the catalyst can be introduced into the polymer by any possible means, such as e.g. mechanical mixing, preferably by using a procedure which can result in a homogeneous distribution of the catalyst and polymer.

In one embodiment of the present invention the catalyst according to formula (I) is contacted with the substrate to be hydrogenated by adding the catalyst or catalyst solution to a substrate solution and mixing until an efficient distribution and dissolution of the catalyst has taken place.

The present process can be performed in the presence or absence of any further co-catalyst or other additives. It is not necessary to add such further co-catalyst or other additives. This applies in particular to co-catalysts which are typically used e.g. in combination with other hydrogenation catalysts known from prior art like the Wilkinson's catalyst. In one embodiment of the present invention the process is conducted in the presence or absence of co-catalysts having the formula R¹ₘZ, wherein R¹ are identical or different and are each a C₁-C₈-alkyl group, a C₄-C₈-cycloalkyl group, a C₆-C₁₅-aryl group or a C₇-C₁₅-aralkyl group, Z is phosphorus, arsenic, sulphur or a sulphoxide group S=O, preferably phosphorus, and m is 2 or 3, preferably 3. In a further embodiment the present process is conducted in the presence or absence of triphenylphosphine.

The hydrogenation process of the present invention can be undertaken in a suitable reactor equipped with temperature regulating and agitating means. It is possible to perform the process either batch-wise or continuously.

During the course of the hydrogenation reaction of the present invention, the hydrogen is added to the reactor. The reaction time is typically from about one quarter of an hour to about 100 hours, depending on operational conditions. As the novel catalysts are robust, it is not necessary to use a special gas dryer to dry the hydrogen.

According to the present invention, when the hydrogenation reaction is complete, to the extent desired, the reaction vessel can be cooled (if applicable) and vented and the hydrogenated substrate can be isolated by conventional methods well known to any artisan.

During the process according to the invention it may happen that a hydrogenation reaction and a metathesis reaction occur simultaneously. In case polymeric substrates and in particular nitrile rubbers are used as substrates in the process according to the invention, such metathesis reaction results in a decrease of the molecular weight of the substrate.

### EXAMPLES:

In the following IMes₂ is used as an abbreviation of a 1,3-bis(2,4,6-trimethylphenyl) imidazoline ligand, SIMes₂ is used as an abbreviation of a 1,3-bis(2,4,6-trimethylphenyl)-2-imidazolidine ligand and Im is used as an abbreviation for imidazole.

### General procedures:

Manipulations were done using standard Schlenk and glovebox techniques (O₂ level < 0.1 ppm; N₂ as inert gas), unless noted differently. Solvents, namely CH₂Cl₂, Et₂O, THF, toluene, and hexane, were used in dried form and stored under N₂. RuHCl(PPh₃)₃ was prepared according to a modified literature procedure (J. Mol. Catal. A:Chem. 2006, 259, 17-23) where EtOH was replaced with sec-BuOH.

### A Synthesis of ligands and catalysts

### A.1 Synthesis of [(CH₃OCH₂CH₂)₂Im]Cl (1)

Chloromethylethylether (5.0 mL, 54.9 mmol) was added to a solution of trimethylsilylimidazole (2.229 g, 15.892 mmol) in toluene (5 mL). The mixture was refluxed in the dark for 72 h during which two layers formed. The top layer was syringed off and discarded. To the viscous bottom layer was added methylene chloride (10 mL) and pentane (20 mL). This mixture was stirred and the top layer was syringed off. The remaining colorless oil was dried in vacuum (3.489 g, 99%) resulting in the following analytical data:
**¹H NMR (CD₂Cl₂, 5.32 ppm).** 3.31 (s, 6H, 2 × OMe), 3.73 (t, 4H, 2 × CH₂), 4.53 (t, 4H, 2 × CH₂), 7.59 (s, 2H, 2 × CH), 10.47 (s, 1H, NCHN).
**¹³C NMR (CD₂Cl₂, 53.5 ppm):** 49.49 (2 × OMe), 58.65 (2 × CH₂), 70.23 (2 × CH₂), 122.49 (2 × CH), 137.71 (NCHN).

### A.2 Synthesis of A_{g}Cl[(CH₃OCH₂CH₂)₂Im] (2)

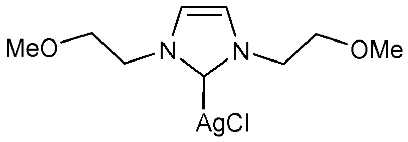

Ag₂O (0.338 g, 1.46 mmol) in methylene chloride (5 mL) was added to a solution of [(CH₃OCH₂CH₂)₂Im]Cl (1) in methylene chloride (5 mL). The slurry was stirred in the dark for 16 h. The excess Ag₂O was filtered off through celite and the resulting colorless solution was concentrated to approximately to 2 mL and 15 mL of pentane were added causing a white precipitate to form. The solid settles and the colorless solution was syringed off. The white solid was dried in vacuum (0.301g, 88%) resulting in the following analytical data:
**¹H NMR (CD₂Cl₂, 5.32 ppm):** 3.32 (s, 6H, 2 × OMe), 3.67 (t, 4H, 2 × CH₂), 4.25 (t, 4H, 2 × CH₂), 7.10 (s, 2H, 2 × CH).
**¹³C NMR (53.8 ppm):** 52.3 (2 × OMe), 59.1 (2 × CH₂), 72.4 (2 × CH₂), 122.2 (CH), 179.8 (NCN). **Anal.Calcd for C₉H₁₆AgCIN₂O₂ (327.56):** C, 33.00; H, 4.92; N, 8.55. **Found:** C, 33.15; H, 4.68; N, 8.91.
**ESI-MS:** 475 [M-AgCl₂]⁺.

### A.3 Synthesis of RuHCl(PPh₃)₂[(CH₃OCH₂CH₂)₂I] (3)

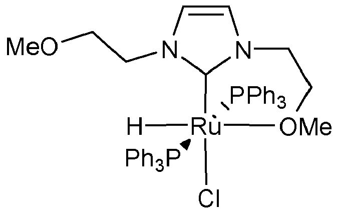

AgCl[(CH₃OCHCH₂)₂Im] **(2)** (0.128 g, 0.391 g) and RuHCl(PPh₃)₃ (0.306 g, 0.331 mmol) were combined and toluene (15 mL) was added producing a color change from purple to red. The suspension was stirred for 16 h at room temperature. The mixture was filtered through a plug of celite and the red filtrate was concentrated to 5 mL. The addition of pentane caused a yellow precipitate to form that was collected by filtration. This solid was washed with pentane and dried on high vacuum. The solid was dissolved in a methylene chloride (5 mL), diethyl ether (15 mL). Upon sitting colorless crystals of AgCl(PPh₃) deposited which were filtered off. The remaining filtrate was concentrated to dryness to give pure product (0.230 g, 82%) resulting in the following analytical data:
**¹H NMR (C₆D₆):** -23.54 (t, J = 24.11 Hz, 1H, RuH), 2.22 (m, 2H, CH₂), 2.67 (s, 3H, OCH₃), 2.86 (m, 2H, CH₂), 2.91 (s, 3H, OCH₃), 2.99 (m, 2H, CH₂), 3.06 (m, 2H, CH₂), 5.95 (s, 1H, CH, Im), 6.34 (m, 1H, CH, Im), 7.04 (m, 1H, CH, Im), 7.04-7.12 (m, 18H, 2 × PPh₃), 7.80-7.88 (m, 12 H, 2 × PPh₃).
**¹³C NMR:** 48.57 (CH₂), 50.32 (CH₂), 57.63 (OCH₃), 59.51 (OCH₃), 70.17 (CH₂), 72.65 (CH₂), 120.13 (CH, Im), 120.17 (CH, Im), 134.24 (d, J = 19.5Hz, *ipso*-C, PPh₃), 135.02 (t, J = 5.8 Hz, PPh₃), 139.37 (t, J = 16.5 Hz, PPh₃), quaternary NCN carbon not observed.
**³¹P NMR:** 44.54 (PPh₃), 44.67 (PPh₃).
**Anal.Calcd for C₄₅H₄₈CIN₂O₂P₂Ru (847.35):** C, 63.86; H, 5.60; N, 3.31. **Found:** C, 63.43; H, 5.84; N, 3.42.

### A.4 Synthesis of RuHCl(PPh₃)((CH₃OCH₂CH₂)₂Im)(SIMes₂) (4)

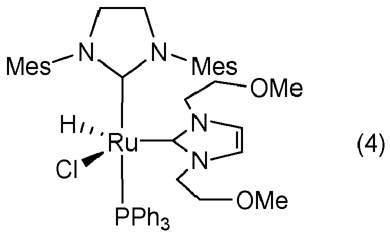

RuHCl(PPh₃)₂[(CH₃OCH₂CH₂)₂Im] (3) (1.581 g, 1.868 mmol) and SIMes₂ (1.041 g, 3.397 mmol) were combined. Tetrahydrofuran (30 mL) was added and the mixture was heated at 60 °C for 24 h. All volatiles were removed in vacuum. The oily solid was dissolved in toluene (5 mL) and the solution was filtered through neutral alumina. To the red solution was added pentane (15 mL). The solution was allowed to rest for 24 h during which time red crystals formed (1.157 g, 70%) resulting in the following analytical data:
**¹H NMR (CD₂Cl₂):** -28.87 (d, J = 27.0 Hz, 1H, RuH), 1.71 (br. s, 3H, CH₃, Mes), 2.04-2.12 (m, 1H, CH₂), 2.25 (br. s, 3H, CH₃, Mes), 2.37-2.75 (m, 18H), 2.87 (s, 3H, OCH₃), 2.88-2.94 (m, 1H, CH₂), 3.12 (s, 3H, OCH₃), 3.57-3.64 (m, 1H, CH₂), 3.68-3.89 (m, 4H, NCH₂CH₂N), 3.92-3.99 (m, 1H, CH₂), 6.56 (d, J = 2.2 Hz, 1H, Im), 6.61-6.71 (m, 2H, 2 × CH, Im, Mes), 6.88 (br. s, 1H, CH, Mes), 6.98-7.05 (m, 13 H, PPh₃, 13 CH, o-H and *m*-H, PPh₃ and CH, Mes), 7.12-7.18 (m, 3H, p-H, PPh₃).
**¹³C NMR (CD₂Ch):** 16.85 (CH₃, Mes, *o*-H), 20.83 (CH₃, Mes, *p*-H), 46.33 (2 × CH₂), 47.79 (2 × CH₂), 51.33 (d, ⁴J_{C-P}, NCH₂CH₂N), 57.52 (OCH₃), 58.19 (OCH₃), 70.82 (CH₂), 71.56 (CH₂), 118.52 (CH, Im), 119.43 (CH, Im), 127.18 (d, J = 8.1 Hz, *m*-C, PPh₃), 127.86 (J = 1.6 Hz, PPh₃, *p*-C, PPh₃), 134.05 (d, J = 10.9 Hz, *o*-C, PPh₃), 140.26 (d, J = 29.3 Hz, PPh₃, *ipso*-C, PPh₃), 189.02 (NCN) 227.56 (d, J = 60 Hz, NCN).
**³¹P NMR:** 42.33 (d, J = 23.3 Hz).
**Anal.Calcd for C₄₈H₅₈CIN₄O₂PRu (890.50):** C, 64.74; H, 6.56 ; N, 6.29. **Found:** C, 64.73; H, 7.13; N, 6.42.

### A.5 Synthesis of [(O(CH₂CH₂ImCH₃)₂]Br₂ (5)

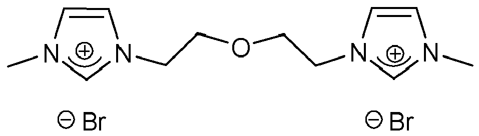

Bis(2-bromoethyl)ether (7.125 g, 30.72 mmol) was added to a solution of methylimidazole (6.025 g, 73.37 mmol) in toluene (30 mL). The mixture was heated to 90 °C for 48 h during which time a bottom light yellow layer formed. The top layer was decanted off and the oil was dried in vacuum. Upon standing the oil solidified to give an off-white solid (12.127 g, 99%) resulting in the following analytical data:
**¹H NMR ((CD₃)₂SO 2.50 ppm):** 3.78 (t, 4H, 2 × CH₂), 3.89 (s, 6H, 2 × CH₃), 4.84 (t, 4H, 2 × CH₂), 7.74 (s, 4H, 4 × CH), 9.26 (s, 2H, 2 × NCHN).
**¹³C NMR ((CD₃)₂SO 39.50 ppm):** 35.77 (2 × CH₃), 48.52 (2 × CH₂), 67.95 (2 × CH₂), 122.59 (2 × CH), 123.19 (2 × CH), 136.79 (2 × NCHN).
**Anal.Calcd for C₁₂H₂₀Br₂N₄O (396.12):** C, 36.38; H, 5.09; N, 14.14. **Found:** C, 36.68; H, 5.11; N, 14.53.
**ESI-MS, m/z:** 317 [M-Br]⁺.

### A.6 Synthesis of Ag₂Br₂[(O(CH₂CH₂ImCH₃)₂] (6)

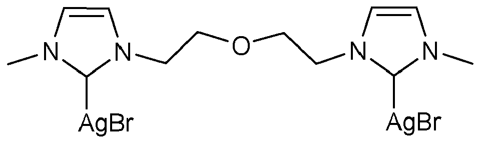

Ag₂O (0.144 g, 0.621 mmol) in methylene chloride (10 mL) was added to a slurry of [(O(CH₂CH₂ImCH₃)₂]Br₂ (0.246 g, 0.621 mmol) in methylene chloride (5 mL). The mixture was stirred in the dark for 24 h to produce an off-white suspension. The solid was allowed to settle and the solution was decanted off. The solid was washed with hexane (10 mL) and dried in vacuum. (0.370 g, 98%) resulting in the following analytical data:
**¹H NMR ((CD₃)₂SO 2.50 ppm):** 3.74 (t, 4H, 2 × CH₂), 3.76 (s, 6H, 2 × CH₃), 4.23 (t, 4H, 2 × CH₂), 7.37-7.38 (m, 2H, CH, Im)
**¹³C NMR ((CD₃)₂SO 39.50):** 38.07 (2 × CH₃), 50.64 (2 × CH₂), 69.48 (2 × CH₂), 121.36 (CH, Im), 122.64 (CH, Im), 180.34 (NCN, Im).
**Anal. Calcd for C₁₂H₁₈gAg₂Br₂N₄O (609.84):** C, 23.63; H, 2.98; N, 9.19. **Found:** C, 23.13; H, 2.94; N, 8.86.
**ESI-MS, m/z:** 421 [MH-AgBr]⁺.

### A.7 Synthesis of [RuH((CH₃OCH₂CH₂)₂Im)(SImMes₂)][(η⁶-Ph)BPh₃] (7)

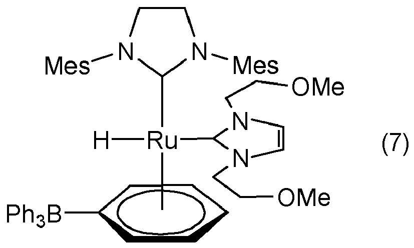

RuHCl(PPh₃)((CH₃OCH₂CH₂)₂Im)(SImMes₂) (4) (0.139 g, 0.156 mmol) in methylene chloride (5 mL) was added to a slurry of NaBPh₄ (0.065 g, 0.190 mmol) in methylene chloride (5 mL). The mixture was stirred for 16 h at room temperature during which time the colour of the solution changed from red to yellow. After that a white solid was filtered off through celite and the filtrate concentrated to 2 mL and 15 mL of pentane added to precipitate light yellow solid. The solid was dissolved in methylene chloride (2mL) and benzene (10 mL) and allowed to sit at room temperature for 2 days during which pale yellow crystals formed (0.135 g, 95%) resulting in the following analytical data:
**¹H NMR (CD₂Cl₂):** -9.28 (s, 1H, RuH), 1.50 (s, 6H, 2 × CH₃, Mes), 2.29-2.34 (m, 1H, CH₂), 2.34 (s, 6H, 2 × CH₃, Mes), 2.46 (s, 6H, 2 × CH₃, Mes), 2.48-2.51 (m, 1H, CH₂), 2.61-2.66 (m, 1H, CH₂), 3.03 (s, 3H, OCH₃), 3.38 (s, 3H, OCH₃), 3.52 (m, 8H), 3.95 (t, J = 5.8 Hz, *m*-H, Ph), 3.98-4.04 (m, 1H, NCH₂CH₂N), 4.14 (t, J = 5.8 Hz, *m*-H, Ph), 4.27 (d, J = 6.3 Hz, 1H, o-H, Ph), 4.75 (d, J = 4.8 Hz, 1H, o-H, Ph), 5.22 (t, J = 5.6 Hz, *p*-H, Ph) 6.73 (s, 2H, 2 × CH, Mes), 6.88 (d, J = 2.1 Hz, 1H, Im), 6.95 (t, J = 7.3 Hz, 3H, *p*-H, BPh₃), 7.01 (d, J = 2.1 Hz, 1H, Im), 7.04 (t, J = 7.5 Hz, 6H, *m*-H, BPh₃), 7.10 (s, 2H, 2 × CH, Mes), 7.33 (d, J = 7.2 Hz, 6H, o-H, BPh₃).
**¹¹B {¹H} NMR (CD₂Cl₂):** -8.11 (s, BPh₄).
**¹³C NMR ((CD₂Cl₂ 53.5 ppm):** 17.32 (CH₃, Mes), 19.79 (CH₃, Mes), 20.91 (CH₃, Mes), 50.89 (CH₂), 51.07 (CH₂), 51.81 (NCH₂CH₂N), 58.07 (OCH₃), 58.96 (OCH₃), 71.42 (CH₂), 71.88 (CH₂), 86.79 (o-C, BPhRu), 89.27 (*p*-C, BPhRu), 90.72 (o-C, BPhRu), 94.93 (*m*-C, BPhRu), 98.81 (*ipso*-C, BPhRu), 119.35 (CH, Im), 120.91 (CH, Im), 122.73 (*p*-C, BPh₃), 125.65 (*m*-C, BPh₃), 129.12 *(ipso-C,* Mes), 129.40 (4 × CH, Mes), 136.26 (6 C, *o*-C, BPh₃), 136.83 (*ipso*-C, BPh₃), 137.53 *(ipso-C,* Mes), 139.79 (*ipso*-C, Mes), 184.13 (NCN), 214.22 (NCN).
**Anal.Calcd for C₅₄H₆₃BN₄O₂Ru (911.98):** C, 71.12; H, 6.96; N, 6.14. Found: C, 71.59; H, 7.29; N, 5.80.

### A.8 Synthesis of [Ru(O(CH₂CH₂ImCH₃)₂PPh₃)₂][A₂Br₂] (8)

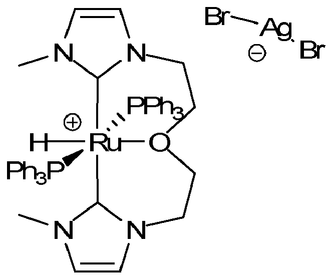

RuHCl(PPh₃)₃ (1.103, 1.193) in methylene chloride (5 mL) was added to a slurry of Ag₂Br₂[(O(CH₂CH₂ImCH₃)₂] (6) (0.842 g, 1.381 mmol) in methylene chloride (5 mL) at room temperature resulting in color change from purple to red over a period of 16 h. The mixture was filtered through a plug of celite and the red filtrate was concentrated to 2 mL. The addition of THF to this solution caused a yellow precipitate to form. The solid was collected by filtration and washed with THF (40 mL) and then dried on high vacuum (0.752 g, 56 %) resulting in the following analytical data:
**¹H NMR (CD₂Cl₂, 5.32 ppm):** -21.76 (t, J = 23.5 Hz, 1H, RuH), 2.90 (s, 6H, 2 × NCH₃), 3.42 (m, 4H, 2 × CH₂), 3.58 (m, 4H, 2 × CH), 6.44 (d, J = 1.9 Hz, 2H, Im), 6.67 (d, J = 1.9 Hz, 2H, 1m), 7.09-7.15 (m, 12 H, PPh₃, *o*-H, 2 × PPh₃), 7.20 (t, J = 7.3 Hz, 12 H, *m*-H, 2 × PPh₃), 7.28 (t, J = 7.1 Hz, 6 H, p-H, 2 × PPh₃).
**¹³C NMR ((CD₂Cl₂ 53.5 ppm):** 37.60 (2 × NCH₃), 49.95 (2 × CH₂), 72.53 (2 × CH₂), 121.42 (2 × CH, Im), 123.61 (2 × CH, Im), 127.99 (t, ³J_{CP} = 4.0 Hz, *m*-C, 2 × PPh₃), 128.86 (p-C, 2 × PPh₃), 132.94 (t, ²J_{CP} = 5.66 Hz, *o*-C, 2 × PPh₃), 138.31 (t, ¹J_{CP} = 16.95 Hz, *ipso*-C, 2 × PPh₃) 191.56 (2 × NCN, Im).
³¹P NMR: 47.26 (s, 2 × PPh₃).
**Anal.Calcd for C₄₈H₄₉AgBr₂N₄OP₂Ru (1128.63):** C, 51.08; H, 4.38; N, 4.96. **Found:** C, 50.84; H, 4.50; N, 4.93.

### A.9 Synthesis of [RuH(O(CH₂CH₂ImCH₃)₂(PPh₃)₂] [BPh₄] (9)

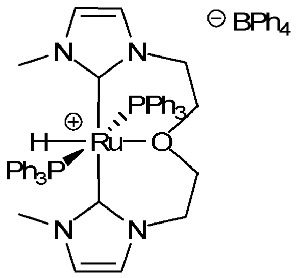

[RuH(O(CH₂CH₂ImCH₃)₂PPh₃)₂][AgBr₂] (8) (0.114 g, 0.101 mmol) was dissolved in methylene chloride (5 mL) and added to a slurry of NaBPh₄ (0.062 g, 0.181 mmol) in methylene chloride. The mixture was stirred for 24 h without any noticeable colour change. The resulting white precipitate was filtered off and the solution was concentrated to dryness to give a light yellow foam/solid. Pentane was added to the mixture which was then stirred to produce a yellow suspension. The solution was decanted off and the yellow solid was dried on high vacuum (0.110 g, 93%) resulting in the following analytical data:
**¹H NMR (CD₂Cl₂, 5.32 ppm):** -21.77 (t, J = 25.5 Hz, 1H, RuH), 2.90 (s, 6H, 2 × NCH₃), 3.16 (m, 4H, 2 × CH₂), 3.34 (m, 4H, 2 × CH₂), 6.41 (s, 2H, Im), 6.52 (s, 2H, Im), 6.88 (t, J = 7.3 Hz, 4H, *p*-H, BPh₄), 7.04 (m, 8 H, *o*-H, BPh₄), 7.07-7.13 (m, 12H, *m*-H, 2 × PPh₃), 7.19 (t, J = 6.7 Hz, 12H, *m*-H, 2 × PPh₃), 7.26-7.35 (m, 14 H, (*p*-H, 2 × PPh₃), (*m*-H, BPh₄)).
**¹¹B {¹H} NMR (CD₂Cl₂):** -6.59 (s).
**¹³C NMR ((CD₂Cl₂ 53.5 ppm):** 37.61 (2 × NCH₃), 49.70 (2 × CH₂), 72.32 (2 × CH₂), 121.48 (2 × CH, Im), 121.83 (*p*-C, BPh₄), 123.49 (2 × CH, Im), 125.70 (q, ²J_{CP} = 2.7 Hz, o-C, BPh₄), 127.98 (t, ³J_{CP} = 4.0 Hz, *m*-C, 2 × PPh₃), 128.91 (p-C, 2 × PPh₃), 132.91 (t, ²J_{CB} = 5.7 Hz, *o*-C, 2 × PPh₃), 135.95 (q,³J_{CB} = 1.3 Hz, *m*-C, BPh₄), 138.24 (t, ¹J_{CP} = 17.0 Hz, *ipso*-C, 2 × PPh₃), 164.04 (q, ¹J_{CB} = 49.4 Hz, *ipso*-C, BPh₄), 191.45 (2 × NCN, Im)
**³¹P NMR:** 48.43 (s).
**Anal.Calcd for C₇₂H₆₉BN₄OP₂Ru (1180.17):** C, 73.27; H, 5.89 ; N, 4.75. **Found:** C, 73.26; H, 6.21; N, 4.61.

### A.10 Synthesis of [RuH((CH₃OCH₂CH₂)₂Im)(SIm Mes₂)][(PF₆] (10)

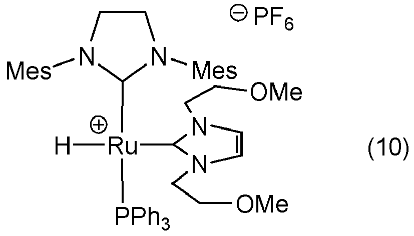

The title compound (10) was prepared by treating RuHCl(PPh₃)((CH₃OCH₂CH₂)₂Im)(SImMeS₂) (4) in methylene chloride (5 mL) with an equimolar amount of AgPF₆ in methylene chloride (5 mL). Compound **10** was isolated a red crystals from a THF/pentane solution resulting in the following analytical data:
**¹H NMR (CD₂Cl₂)** -23.55 (br. s, RuH)
**¹⁹F {¹H} NMR (CD₂Cl₂):** 73.4 (d, J = 710.4 Hz).
**³¹P {¹H} NMR (CD₂Cl₂):** 43.3 (br s, PPh₃), -143.44 (sept, PF₆)

### B Hydrogenation Reactions

### B.1 Series 1 and 2 (Hydrogenation of NBR)

C₆H₅Cl was distilled over P₂O₅. H₂ was purified by passing through a Matheson gas drier model 450B. In Series 1 and 2 commercially available Perbunan^{®} T 3435 was used as nitrile rubber:
- **Perbunan^{Ⓡ} T 3435:**: 34wt% ACN; Mooney viscosity (ML 1+4 at 100°C): 35 +/- 3 MU; Mₙ = 80,000 g/mol; M_{w} = 260,000 g/mol.

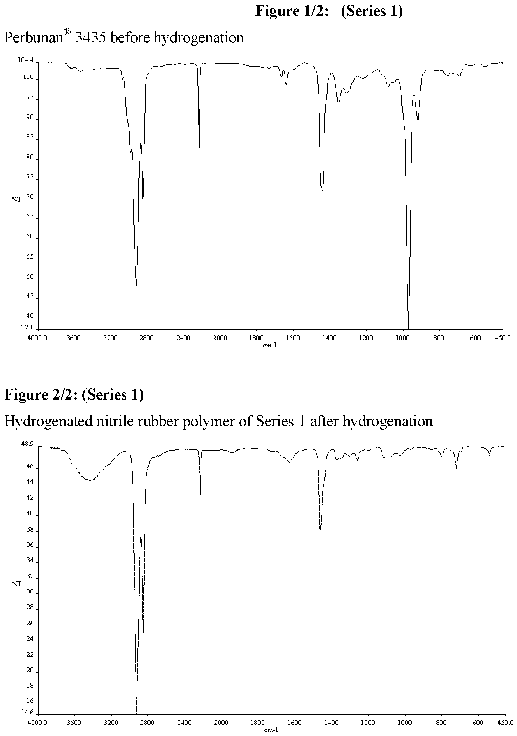

In the glove box, the Parr reactor was charged with 10 ml of nitrile rubber solution (5wt% in C₆H₅Cl) and RuHCl(PPh₃)((CH₃OCH₂CH₂)₂Im)(SImMes₂) in an amount as listed in Table 1 (lying in the range of from 0.2 to 10 µmol). The autoclave was taken out of the glove box and purged with 10 bar H₂ for 15 seconds. The temperature was set at 80°C and the pressure at 40 bar of H₂. After the temperature equilibrated to 80°C the pressure was adjusted to 50 bar, and the reaction was carried out for 20 hours under vigorous magnetic stirring. The hydrogenation run was stopped by cooling down the reactor to room temperature and venting H₂. The polymer was coagulated in methanol, filtered and dried at 50°C under vacuum for 24 hours. Characterization of the polymer was carried out by FT-IR spectroscopy. The degree of hydrogenation was determined by IR and ¹H NMR (Rubber Chemistry and Technology, vol 63, 244) and revealed full hydrogenation of nitrile rubber to hydrogenated nitrile rubber (see Figures 1 and 2). The results of the hydrogenation are summarized in Tables 1 and 2.

The work up of the polymer encompassed treatment with acidic MeOH, unless otherwise indicated in the Tables. No additive was added during hydrogenation except for the comparison examples C2a and b and C3a and b in which 400 eq PPh₃ were added.

### B.2 Series 3 (Hydrogenation of 1-hexene)

### Hydrogenation Procedure (NMR method; in-situ formation of the active catalyst, no co-catalyst, no work-up required)

In a glove box, a sample of the appropriate metal complex (catalyst) and a deuterated solvent [CD₂Cl₂ (0.665 g) or C₆D₅Br (0.748 g)] were combined in a 2 dram vial and transferred to a J-Young tube. The respective amounts are given in Table 3. 1-hexene was added in the amount mentioned in Table 3, too, to the solution and the J-Young tube was sealed. On a schlenk line, the reaction mixture was degassed 3 times using the freeze-pump-thaw method. The sample was then frozen once more in liquid nitrogen and 4 atm of H₂ was added. The J-Young tube was sealed again and warmed to room temperature before being placed in an oil bath pre-heated to the appropriate temperature (45°C or 100°C). The sample was refilled with H₂ at the 4 h and 8 h time periods. NMR spectra were obtained at appropriate intervals and relative integration of substrate and product peaks were used to determine the percent composition of the mixture. The results of the hydrogenation are summarized in Table 3.

### Peaks used for Determination of Concentrations:

(The number in brackets below represents the relative number of protons represented by each peak - to determine the concentration of each the peak integrations must be normalized)
*CD₂Cl₂ [45°C Reactions], C₆D₅Br [100°C Reactions]*
1-hexene - 4.98 ppm (1)
2-hexene - 5.45 ppm (1)
hexane -1.31 ppm (4)

### B.3 Series 4 (Hydrogenation of cyclohexene)

### Hydrogenation Procedure (NMR method; 5 mol% catalyst based on cyclohexene; in-situ formation of the active catalyst, no co-catalyst, no work-up required):

In a glove box, a sample of the appropriate metal complex (catalyst) and a deuterated solvent [CD₂Cl₂ (0.665 g) or C₆D₅Br (0.748 g)] were combined in a 2 dram vial and transferred to a J-Young tube. Twenty equivalents of cyclohexene (8.22 mg, 0.100 mmol) were added to the solution and the J-Young tube was sealed. On a schlenk line, the reaction mixture was degassed 3 times using the freeze-pump-thaw method. The sample was then frozen once more in liquid nitrogen and 4 atm of H₂ was added. The J-Young tube was sealed again and warmed to room temperature before being placed in an oil bath pre-heated to the appropriate temperature (45°C or 100°C). The sample was refilled with H₂ at the 4 h and 8 h time periods. NMR spectra were obtained at appropriate intervals and relative integration of substrate and product peaks were used to determine the percent composition of the mixture. The results of the hydrogenation are summarized in Table 4.

### Peaks used for Determination of Concentrations:

(The number in brackets below represents the relative number of protons represented by each peak - to determine the concentration of each the peak integrations must be normalized)
*CD₂Cl₂ [45°C Reactions], C₆D₅Br [100°C Reactions]*
Cyclohexene - 5.67 ppm (1)
Cyclohexane -1.44 ppm (6)

### B.4 Series 5 (Hydrogenation of styrene)

### Hydrogenation Procedure (NMR method; 5 mol% catalyst based on styrene; in-situ formation of the active catalyst, no co-catalyst, no work-up required):

In a glove box, a sample of the appropriate metal complex (catalyst) (0.005 mmol) and 500 uL of deuterated solvent [CD₂Cl₂ (0.665 g) or C₆D₅Br (0.748 g)] were combined in a 2 dram vial and transferred to a J-Young tube. Twenty equivalents of Stryene (10.45 mg, 0.100 mmol) were added to the solution and the J-Young tube was sealed. On a schlenk line, the reaction mixture was degassed 3 times using the freeze-pump-thaw method. The sample was then frozen once more in liquid nitrogen and 4 atm of H₂ was added. The J-Young tube was sealed again and warmed to room temperature before being placed in an oil bath pre-heated to the appropriate temperature (45°C or 100°C). The sample was refilled with H₂ at the 4 h and 8 h time periods. NMR spectra were obtained at appropriate intervals and relative integration of substrate and product peaks were used to determine the percent composition of the mixture. The results of the hydrogenation are summarized in Table 5.

### Peaks used for Determination of Concentrations:

(The number in brackets below represents the relative number of protons represented by each peak - to determine the concentration of each the peak integrations must be normalized)
*CD₂Cl₂ [45°C Reactions], C₆D₅Br [100°C Reactions]*
Styrene - 5.80 ppm (1)
Ethylbenzene - 1.26 (3)

### B.5 Series 6 (Hydrogenation of methyl 2-acetamidoacrylate to demonstrate olefin selectivity) Hydrogenation Procedure (NMR method; 5 mol% catalyst based on methyl 2-acetamido-acrylate; in-situ formation of the active catalyst, no co-catalyst, no work-up required):

In a glove box, a sample of the appropriate metal complex (catalyst) (0.0056 mmol) and 500 uL of deuterated solvent [CD₂Cl₂ (0.665 g) were combined in a 2 dram vial and transferred to a J-Young tube. Twenty equivalents of methyl 2-acetamidoacrylate (16 mg, 0.112 mmol) were added to the solution and the J-Young tube was sealed. On a schlenk line, the reaction mixture was degassed 3 times using the freeze-pump-thaw method. The sample was then frozen once more in liquid nitrogen and 4 atm of H₂ was added. The J-Young tube was sealed again and warmed to room temperature before being placed in an oil bath pre-heated to the appropriate temperature (45°C). The sample was refilled with H₂ at the 4 h and 8 h time periods. NMR spectra were obtained at appropriate intervals and relative integration of substrate and product peaks were used to determine the percent composition of the mixture. The results of the hydrogenation are summarized in Table 6.

### Peaks used for Determination of Concentrations

(The number in brackets below represents the relative number of protons represented by each peak - to determine the concentration of each the peak integrations must be normalized)
*CD₂Cl₂ [45°C Reactions].*
Methyl 2-acetamidoacrylate - 6.52 ppm (1)
N-acetyl-alanine methyl ester - 4.50 (1)

### B.6 Series 7 (Hydrogenation of dimethyl-2-methylenesuccinate to demonstrate olefin selectivity)

### Hydrogenation Procedure (NMR method; 5 mol% catalyst based on dimethyl -2-methylene-succinate; in-situ formation of the active catalyst, no co-catalyst, no work-up required):

In a glove box, a sample of the appropriate metal complex (catalyst) (0.0056 mmol) and 500 uL of deuterated solvent [CD₂Cl₂ (0.665 g) were combined in a 2 dram vial and transferred to a J-Young tube. Twenty equivalents of dimethyl 2-methylenesuccinate (18 mg, 0.112 mmol) were added to the solution and the J-Young tube was sealed. On a schlenk line, the reaction mixture was degassed 3 times using the freeze-pump-thaw method. The sample was then frozen once more in liquid nitrogen and 4 atm of H₂ was added. The J-Young tube was sealed again and warmed to room temperature before being placed in an oil bath pre-heated to the appropriate temperature (45°C). The sample was refilled with H₂ at the 4 h and 8 h time periods. NMR spectra were obtained at appropriate intervals and relative integration of substrate and product peaks were used to determine the percent composition of the mixture. The results of the hydrogenation are summarized in Table 7.

### Peaks used for Determination of Concentrations

(The number in brackets below represents the relative number of protons represented by each peak - to determine the concentration of each the peak integrations must be normalized)
*CD₂Cl₂ [45°C Reactions]*
Dimethyl 2-methylenesuccinate - 5.70 ppm (1)
Dimethyl 2-methylsuccinate - 2.87 ppm (1)

In the following Tables "T" stands for reaction temperature and "p" for pressure.

**Table 1: Series 1 - Hydrogenation of NBR (Perbunan^{®} T3435) (Ex.1-14 with RuHCl(PPh₃)((CH₃OCH₂CH₂)₂Im)(SIMes₂) (4); Comp. Ex C1a/b and C2a/b with Wilkinson's catalyst with or without 400eq PPh₃); (in all Examples: reaction time: 20 h; p = 50 bar)**

| **Example** | **catalyst** | | | | **NBR (g)** | **PPh₃ added (equiv)** | **T (°C)** | **degree of hydrogenation (%)** | **HNBR (hydrogenated nitrile rubber)** | | |
|---|---|---|---|---|---|---|---|---|---|---|---|
| | **molar mass (g/mol)** | **loading** | | | | | | | **Mn (g/mol)** | **Mw (g/mol)** | **PDI** |
| | | **(µmol)** | **(g)** | **(phr)** | | | | | | | |
| **1** | 890.5 | 10 | 0.0089 | 1.62 | 0.55 | 0 | 80 | 99 | 54,000 | 80,200 | 1.49 |
| **2** | 890.5 | 5 | 0.0044 | 0.8 | 0.55 | 0 | 80 | 95 | 83,000 | 124,000 | 1.49 |
| **3** | 890.5 | 1 | 0.00089 | 0.162 | 0.55 | 0 | 80 | 98 | 135,000 | 358,000 | 2.65 |
| **4** | 890.5 | 0.5 | 0.00044 | 0.08 | 0.55 | 0 | 80 | 94 | 129,000 | 375,000 | 2.91 |
| **5** | 890.5 | 5 | 0.0044 | 0.8 | 0.55 | 0 | 25 | 54 | 73,000 | 117,000 | 1.6 |
| **6** | 890.5 | 1 | 0.00089 | 0.162 | 0.55 | 0 | 25 | 0 | 117,000 | 340,000 | 2.9 |
| **7** | 890.5 | 0.5 | 0.00044 | 0.08 | 0.55 | 0 | 100 | 17 | nd | nd | nd |
| **8** | 890.5 | 0.5 | 0.00044 | 0.08 | 0.55 | 0 | 120 | 18 | nd | nd | nd |
| **9** | 890.5 | 0.5 | 0.00044 | 0.08 | 0.55 | 0 | 140 | 29 | nd | nd | nd |
| **10** | 890.5 | 0.2 | 0.00018 | 0.033 | 0.55 | 1 | 80 | 10 | nd | nd | nd |
| **11** | 890.5 | 0.5 | 0.00044 | 0.08 | 0.55 | 1 | 80 | 28 | nd | nd | nd |
| **12** | 890.5 | 0.5 | 0.00044 | 0.08 | 0.55 | 1 | 100 | 30 | nd | nd | nd |
| **13** | 890.5 | 0.5 | 0.00044 | 0.08 | 0.55 | 1 | 120 | 59 | nd | nd | nd |
| **14** | 890.5 | 0.5 | 0.00044 | 0.08 | 0.55 | 1 | 140 | 29 | nd | nd | nd |
| **C1 a** | 925.22 | 0.5 | 0.00046 | 0.083 | 0.55 | 0 | 80 | 0 | - | - | - |
| **C1 b** | 925.22 | 0.3 | 0.00028 | 0.051 | 0.55 | 0 | 80 | 0 | - | - | - |
| **C2 a** | 925.22 | 0.5 | 0.00046 | 0.083 | 0.55 | 400 | 80 | 100 | 133,083 | 380,072 | 2.85 |
| **C2 b** | 925.22 | 0.5 | 0.00046 | 0.083 | 0.55 | 400 | 80 | 100 | 129,242 | 337,588 | 2.61 |

**Table 2: Series 2 -Hydrogenation of NBR (Examples 15-17 with different catalysts; Comp. Ex. C3a/C3b and C3c/C3d with Wilkinson's catalyst without or in combination with 400eq PPh₃); (in all Examples: reaction time: 20 h; T = 80°C; p = 50 bar)**

| **Example** | **Catalyst** | | | | **NBR (g)** | **Additive (mg; unless indicated otherwise)** | **workup** | **degree of hydrogenation of soluble fraction (%)** | **HNBR (hydrogenated nitrile rubber)** | | | **degree of hydrogenation of solid fraction (%)** |
|---|---|---|---|---|---|---|---|---|---|---|---|---|
| | **Structure** | **Loading** | | | | | | | | | | |
| | | **(µmol)** | **(g)** | **(phr)** | | | | | **Mn (g/mol)** | **Mw (g/mol)** | **PDI** | |
| **15a** | RuHCl(PPh₃)₂ [(CH₃-OCH₂CH₂)₂Im] (3) (Molar Mass: 846.34 g/mol) | 5 | 0.0042 | 0.64 | 0.55 | BHT (100) | acidic methanol | 42 | 58,274 | 158,205 | 2.72 | 81 |
| **15b** | | 5 | 0.0042 | 0.764 | 0.55 | BHT (100) | vacuum 50 °C | 42 | 60,511 | 245,169 | 4.05 | 81 |
| **15c** | | 5 | 0.0042 | 0.764 | 0.55 | none | acidic methanol | 2 | 43,683 | 96,272 | 2.2 | 90 |
| **15d** | | 5 | 0.0042 | 0.764 | 0.55 | none | vacuum 50 °C | 2 | 43,431 | 97,372 | 2.24 | 90 |
| **15e** | | 5 | 0.0042 | 0.764 | 0.55 | none | acidic methanol | 97 | Insoluble material | | | |
| **15f** | | 2,5 | 0.0021 | 0.382 | 0.55 | none | acidic methanol | 63 | 47,578 | 111,693 | 2.35 | |
| **16a** | [RuH(O(CH₂CH₂ImCH₃)₂ (PPh₃)₂]⁺[AgBr₂] ⁻ (8) (Molar Mass: 1128.63 g/mol) | 5 | 0.0056 | 1.018 | 0.55 | none | acidic methanol | 23 | 36,358 | 91,978 | 2.53 | |
| **16b** | | | | | | | | | | | | |
| | | 5 | 0.0056 | 1.018 | 0.55 | none | acidic methanol | 73 | Insoluble material | | | |
| **17a** | [RuH((CH₃O(CH₂)₂Im) (SIMes₂)] (η⁶ -Ph)BPh₃] (7) (Molar Mass: 911.98 g/mol) | 5 | 0.0046 | 0.836 | 0.55 | none | acidic methanol | 99 | 56,594 | 96,049 | 1.7 | |
| **17b** | | | | | | | | | | | | |
| | | 1 | 0.00091 | 0.165 | 0.55 | none | acidic methanol | 99 | 115,152 | 329,202 | 2.85 | |
| **C3a** | Wilkinson's Catalyst (Molar Mass: 925.22 g/mol) | 0,5 | 0.00046 | 0.083 | 0.55 | PPh₃ (400 eq) | acidic methanol | 100 | 133,083 | 380,072 | 2.85 | n/a |
| **C3b** | | 0,5 | 0.00046 | 0.083 | 0.55 | PPh₃ (400 eq) | vaccum 50 °C | 100 | 129,242 | 337,588 | 2.61 | n/a |
| **C3c** | | 0,5 | 0.00046 | 0.083 | 0.55 | none | acidic methanol | 0 | - | - | - | |
| **C3d** | | 0,3 | 0.00028 | 0.051 | 0.55 | none | acidic methanol | 0 | - | - | - | |

**Table 3: Series 3 - Hydrogenation of 1-hexene (Examples 18 to 21 with different catalysts; Comp. Ex. C4 and C5 with Wilkinson's catalyst and RuHCl(PPh₃)₃, respectively); (in all Examples: p = 4 bar)**

| **Example** | **Catalyst** | | | **1-hexene (mg)** | **solvent** | **solvent (g)** | **T (°C)** | **Time (h)** | **1-hexene (%)** | **2-hexene (%)** | **hexane (%)** |
|---|---|---|---|---|---|---|---|---|---|---|---|
| | **Metal Complex** | **loading (mg)** | **loading (mol%)** | | | | | | | | |
| **18a** | RuHCl(PPh₃)((CH₃O-CH₂CH₂)Im)-(SIMes₂) | 4.45 | 5 | 10.51 | CD₂Cl₂ | 0.681 | 45 | 4 | 0 | 53 | 47 |
| **18b** | | | | | | | | 6 | 0 | 41.5 | 5 8.5 |
| **18c** | **(4)** | | | | | | | 8 | 0 | 29.6 | 70.4 |
| **18d** | (Molar Mass: 890.5 g/mol) | | | | | | | 24 | 0 | 0 | 100 |
| **18e** | | 15 | 5 | 27.7 | CD₅Br | 0.77 | 100 | 4 | 0 | 87 | 13 |
| **18f** | | | | | | | | 24 | 0 | 70 | 30 |
| **19a** | RuHCl(PPh₃)₂[(CH₃O-(CH₂)₂Im] | 4.23 | 5 | 8.41 | CD₂Cl₂ | 0.681 | 45 | 4 | 19.8 | 5.5 | 74.7 |
| **19b** | | | | | | | | 8 | 0 | 6.2 | 93.8 |
| **19c** | **(3)** | | | | | | | 24 | 0 | 0 | 100 |
| **19d** | (Molar Mass: 846.34 g/mol) | 15 | 5 | 27.7 | CD₅Br | 0.77 | 100 | 4 | 37 | 46 | 17 |
| **19e** | | | | | | | | 48 | 9 | 51 | 40 |
| **20a** | [RuH((CH₃O(CH₂)₂)₂Im)-(SIMes₂)][(η⁶-Ph)BPh₃] | 4.56 | 5 | 8.41 | CD₂Cl₂ | 0.681 | 45 | 2 | 84.7 | 0 | 15.3 |
| **20b** | | | | | | | | 4 | 69.6 | 4.9 | 25.5 |
| **20c** | **(7)** | | | | | | | 6 | 30 | 31.6 | 38.4 |
| **20d** | (Molar Mass: 911.98 g/mol) | | | | | | | 24 | 0 | 0 | 100 |
| **20e** | | | | | CD₅Br | 0.77 | 100 | 2 | 0 | 69.7 | 30.3 |
| **20f** | | | | | | | | 4 | 0 | 59.3 | 40.7 |
| **20g** | | | | | | | | 6 | 0 | 48.8 | 51.2 |
| **20h** | | | | | | | | 24 | 0 | 40.5 | 59.5 |
| **21a** | [RuH(O(CH₂CH₂ImCH₃)₂-(PPh₃)₂]⁺ [AgBr₂] ⁻ | 15 | 5 | 27.7 | CD₂Cl₂ | 0.681 | 45 | 4 | 85 | 2 | 13 |
| **21b** | **(8)** | | | | | | | 24 | 0 | 45 | 55 |
| **21c** | (Molar Mass: 1128.63 g/mol) | | 5 | 27.7 | CD₅Br | 0.77 | 100 | 4 | 6 | 65 | 29 |
| **21d** | | | | | | | | 24 | 0 | 62 | 38 |
| **C4a** | RhCl(PPh₃)₃ (Wilkinson's Catalyst) | 4,63 | 5 | 8.41 | CD₂Cl₂ | 0.681 | 45 | 2 | 19.2 | 8.6 | 72.2 |
| **C4b** | | | | | | | | 4 | 0 | 4.8 | 95.2 |
| **C4c** | | | | | | | | 6 | 0 | 0 | 100 |
| **C4d** | | | | | CD₅Br | 0.770 | 100 | 2 | 0 | 57.7 | 42.3 |
| **C4e** | | | | | | | | 4 | 0 | 45 | 55 |
| **C4f** | | | | | | | | 6 | 0 | 22.8 | 77.2 |
| **C4g** | | | | | | | | 24 | 0 | 0 | 100 |
| **C5a** | RuHCl(PPh₃)₃ | 4.62 | 5 | 8.41 | CD₂Cl₂ | 0.681 | 45 | 2 | 0 | 31.3 | 68.7 |
| **C5b** | | | | | | | | 4 | 0 | 16.9 | 83.1 |
| **C5c** | | | | | | | | 6 | 0 | 11.3 | 88.7 |
| **C5d** | | | | | | | | 24 | 0 | 8.6 | 91.4 |
| **C5e** | | | | | CD₅Br | 0.770 | 100 | 2 | 29 | 28.7 | 42.3 |
| **C5f** | | | | | | | | 4 | 25.2 | 23.3 | 52.5 |
| **C5g** | | | | | | | | 6 | 20.2 | 24.0 | 55.8 |
| **C5h** | | | | | | | | 24 | 11.6 | 25.1 | 63.3 |

**Table 4: Series 4 - Hydrogenation of cyclohexene (Examples 22-25 with different catalysts according to the invention, Comp. Ex. C6 and C7 with Wilkinson's catalyst and RuHCl(PPh₃)₃, respectively); (in all Examples: p = 4 bar)**

| **Examples** | **catalyst** | | | **cyclohexene (mg)** | **solvent** | **solvent (g)** | **T (°C)** | **Time (h)** | **cyclohexene (%)** | **cyclohexane (%)** |
|---|---|---|---|---|---|---|---|---|---|---|
| | **metal complex** | **loading (mg)** | **loading (mol %)** | | | | | | | |
| **22a** | RuHCl(PPh₃)( (CH₃OCH₂CH₂)₂Im)-(SIMeS₂) | 4.45 | 5 | 8.22 | CD₂Cl₂ | 0.681 | 45 | 4 | 87 | 13 |
| **22b** | | | | | | | | 6 | 78.5 | 21.5 |
| **22c** | | | | | | | | 8 | 72.1 | 27.9 |
| **22d** | | | | | | | | 24 | 46.9 | 53.1 |
| **22e** | **(4)** | | | | | | | 48 | 16.5 | 83.5 |
| **22f** | | | | | | | | 72 | 0 | 100 |
| **22g** | | 15 | 5 | 29.3 | CD₅Br | 0.77 | 100 | 2 | 94 | 6 |
| **22h** | | | | | | | | 24 | 89 | 11 |
| **23a** | RuHCl(PPh₃)₂[(CH₃OCH₂CH₂)₂Im] | 4.23 | 5 | 8.22 | CD₂Cl₂ | 0.681 | 45 | 4 | 93.1 | 6.9 |
| **23b** | | | | | | | | 6 | 87.2 | 12.8 |
| **23c** | | | | | | | | 8 | 79.6 | 20.4 |
| **23d** | | | | | | | | 24 | 32.1 | 67.9 |
| **23e** | **(3)** | | | | | | | 48 | 11.3 | 88.7 |
| **23f** | | | | | | | | 72 | 0 | 100 |
| **23g** | | 15 | 5 | 29.1 | CD₅Br | 0.77 | 100 | 2 | 95 | 5 |
| **23h** | | | | | | | | 48 | 81 | 19 |
| **24a** | [RuH((CH₃OCH₂CH₂)Im)(SIMes₂)]-[(n⁶-Ph)BPh_{3]} | 4.56 | 5 | 8.22 | CD₂Ch | 0.681 | 45 | 2 | 96.2 | 3.8 |
| **24b** | | | | | | | | 4 | 90.1 | 9.9 |
| **24c** | **(7)** | | | | | | | 6 | 86.1 | 13.9 |
| **24d** | | | | | | | | 8 | 82.6 | 17.4 |
| **24e** | | | | | | | | 24 | 56.8 | 43.2 |
| **24f** | | | 5 | 27 | CD₅Br | 0.77 | 100 | 2 | 89.3 | 10.7 |
| **24g** | | | | | | | | 4 | 85.5 | 14.5 |
| **24h** | | | | | | | | 6 | 84 | 16 |
| **24i** | | | | | | | | 8 | 83.8 | 16.2 |
| **24k** | | | | | | | | 24 | 82.6 | 17.4 |
| **25a** | [RuH(O(CH₂CH₂ImCH₃)₂(PPh₃)₂]⁺ [AgBr₂]⁻ | 15 | 5 | 27 | CD₂Cl₂ | 0.681 | 45 | 4 | n/a | - |
| **25b** | | | | | | | | 24 | n/a | - |
| **25c** | **(8)** | | 5 | 27 | CD₅Br | 0.77 | 100 | 4 | 92 | 8 |
| **25d** | | | | | | | | 24 | 81 | 19 |
| **C6a** | RhCl(PPh₃)₃ (Wilkinson's Catalyst) | 4,63 | 5 | 8,22 | CD₂Cl₂ | 0.681 | 45 | 2 | 24.1 | 75.9 |
| **C6b** | | | | | | | | 4 | 0 | 100 |
| **C6c** | | | | | CD₅Br | 0.77 | 100 | 2 | 69.4 | 30.6 |
| **C6d** | | | | | | | | 4 | 52.1 | 47.9 |
| **C6e** | | | | | | | | 6 | 33 | 67 |
| **C6f** | | | | | | | | 8 | 18.6 | 81.4 |
| **C6g** | | | | | | | | 24 | 3 | 97 |
| **C7a** | RuHCl(PPh₃)₃ | 4,62 | 5 | 8,22 | CD₂CI₂ | 0.681 | 45 | 2 | 63.2 | 36.8 |
| **C7b** | | | | | | | | 4 | 41.3 | 58.7 |
| **C7c** | | | | | | | | 6 | 27.2 | 72.8 |
| **C7d** | | | | | | | | 8 | 15.6 | 84.4 |
| **C7e** | | | | | | | | 24 | 0 | 100 |
| **C7f** | | | | | CD₅Br | 0.77 | 100 | 2 | 98.1 | 1.9 |
| **C7g** | | | | | | | | 4 | 98.1 | 1.9 |
| **C7h** | | | | | | | | 6 | 98.1 | 1.9 |

**Table 5: Series 5 - Hydrogenation of Styrene (Examples 26 -29 with different catalysts, Comp. Ex. C8 and C9 with Wilkinson's catalyst and RuHCl(PPh₃)₃, respectively); (in all Examples: p = 4 bar)**

| **Example** | **catalyst** | | | **styrene (mg)** | **solvent** | **solvent (g)** | **T (°C)** | **time (h)** | **styrene (%)** | **ethylbenzene (%)** |
|---|---|---|---|---|---|---|---|---|---|---|
| | **metal complex** | **loading (mg)** | **loading (mol %)** | | | | | | | |
| **26a** | RuHCl(PPh₃) ((CH₃OCH₂CH₂)₂Im) (SIMes₂) | 4.45 | 5 | 10.45 | CD₂Cl₂ | 0.681 | 45 | 2 | 45.7 | 54.3 |
| **26b** | | | | | | | | 4 | 11 | 89 |
| **26c** | | | | | | | | 6 | 0 | 100 |
| **26d** | **(4)** | 15 | 5 | 37.2 | CD₅Br | 0.77 | 100 | 2 | 83 | 17 |
| **26e** | | | | | | | | 24 | 67 | 33 |
| **27a** | RuHCl(PPh₃)₂ [(CH₃OCH₂CH₂)₂Im] | 4.23 | 5 | 10.45 | CD₂Cl₂ | 0.681 | 45 | 4 | 44 | 56 |
| **27b** | | | | | | | | 6 | 12.4 | 87.6 |
| **27c** | | | | | | | | 8 | 3 | 97 |
| **27d** | | | | | | | | 24 | 0 | 100 |
| **27f** | **(3)** | 15 | 5 | 37.2 | CD₅Br | 0.77 | 100 | 2 | 83 | 17 |
| **27g** | | | | | | | | 24 | 63 | 37 |
| **27h** | | 5 | 5 | 10.45 | CD₅Br | 0.77 | 100 | 2 | 77 | 23 |
| **27i** | | | | | | | | 24 | 41 | 59 |
| **28a** | [RuB((CH₃OCH₂CH₂)₂Im) (SIM4e₂)] [(η)⁶-Ph)BPh₃] | 4.56 | 5 | 10.45 | CD₂Cl₂ | 0.681 | 45 | 2 | 87 | 13 |
| **28b** | | | | | | | | 4 | 79 | 21 |
| **28c** | | | | | | | | 6 | 57 | 43 |
| **28d** | | | | | | | | 24 | 0 | 100 |
| **28e** | **(7)** | | | 10.45 | CD₅Br | 0.77 | 100 | 2 | 60 | 40 |
| **28f** | | | | | | | | 4 | 44 | 56 |
| **28g** | | | | | | | | 6 | 13 | 87 |
| **28h** | | | | | | | | 24 | 0 | 100 |
| **29a** | [RuH(O(CH₂)₂ImCH₃)₂(PPhs₃)]⁺ [AgBr₂]⁻ | 15 | 5 | 37.2 | CD₂Cl₂ | 0.681 | 45 | 4 | n/a | - |
| **29b** | | | | | | | | 24 | n/a | |
| **29c** | **(8)** | | 5 | 37.2 | CD₅Br | 0.77 | 100 | 4 | 77 | 23 |
| **29d** | | | | | | | | 24 | 46 | 54 |
| **C8a** | RhCl(PPh₃)₃ (Wilkinson's Catalyst) | 4,45 | 5 | 10.45 | CD₂Cl₂ | 0.681 | 45 | 2 | 4.1 | 95.9 |
| **C8b** | | | | | | | | 4 | 0 | 100 |
| **C8c** | | | | 10.45 | CD₅Br | 0.77 | 100 | 2 | 32.4 | 67.6 |
| **C8d** | | | | | | | | 4 | 25.0 | 75.0 |
| **C8e** | | | | | | | | 6 | 0 | 100 |
| **C9a** | RuHCl(PPh₃)₃ | 4,62 | 5 | 10.45 | CD₂Cl₂ | 0.681 | 45 | 2 | 18.9 | 81.1 |
| **C9b** | | | | | | | | 4 | 0 | 100 |
| **C9c** | | | | 10.45 | CD₅Br | 0.77 | 100 | 2 | 58.7 | 41.3 |
| **C9d** | | | | | | | | 4 | 56.2 | 43.8 |
| **C9e** | | | | | | | | 6 | 45.8 | 54.2 |
| **C9f** | | | | | | | | 24 | 8.3 | 91.7 |

**Table 6: Series 6 (Hydrogenation of methyl 2-acetamidoacrylate; to demonstrate olefin selectivity); (in all Examples: p = 4 bar and T = 45°C)**

| **Example** | **catalyst** | | | **methyl 2-acetamido acrylate (mg)** | **solvent** | **solvent (g)** | **time (h)** | **methyl 2-acetamido acrylate (%)** | **N-acetylalanine methyl ester (%)** |
|---|---|---|---|---|---|---|---|---|---|
| | **metal complex** | **loading (mg)** | **loading (mol %)** | | | | | | |
| **30a** | R uHCl(PPh₃)( (CH₃OCH₂CH₂)₂Im) (SIMes₂) | 5.0 | 5 | 16.0 | CD₂Cl₂ | 0,681 | 2 | 49 | 51 |
| **30b** | | | | | | | 6 | 6 | 94 |
| **30c** | **(4)** | | | | | | 24 | 0 | 100 |

**Table 7: Series 7 (Hydrogenation of dimethyl 2-methylenesuccinate; to demonstrate olefin selectivity); (in all Examples: p = 4 bar and T = 45°C)**

| **Exa mple** | **catalyst** | | | **dimethyl 2-methylene succinate (mg)** | **solvent** | **solvent (g)** | **time h)** | **dimethyl-2-methylene succinate (%)** | **dimethyl-2-methyl succinate (%)** |
|---|---|---|---|---|---|---|---|---|---|
| | **metal complex** | **loading (mg)** | **loading (mol %)** | | | | | | |
| **31a** | RuHCl(PPh₃) ((CH₃OCH₂CH₂)₂Im) (SIMes₂) | 5.0 | 5 | 18.0 | CD₂Cl₂ | 0.681 | 4 | 58 | 42 |
| **31b** | | | | | | | 8 | 21 | 79 |
| **31c** | **(4)** | | | | | | 24 | 0 | 100 |

**Table 8: Series 8 (Hydrogenation of acrylonitrile; to demonstrate olefin selectivity); (in all Examples: P = 4 bar and T = 45°C)**

| **Example** | **catalyst** | | | **acrylonitrile (mg)** | **solvent** | **solvent (g)** | **time (h)** | **acrylonitrile (%)** | **propionitrile (%)** |
|---|---|---|---|---|---|---|---|---|---|
| | **metal complex** | **loading (mg)** | **loading (mol %)** | | | | | | |
| **32a** | RuHCl(PPh₃) ((CH₃OCH₂CH₂)₂Im) (SIMes₂) | 5.0 | 5 | 6.0 | CD₂Cl₂ | 0.681 | 4 | 45 | 55 |
| **32b** | | | | | | | 8 | 12 | 88 |
| **32c** | **(4)** | | | | | | 24 | 0 | 100 |

**Table 9: Series 9 (Hydrogenation of allylamine; to demonstrate olefin selectivity); (in all Examples: p = 4 bar and T = 45°C)**

| **Example** | **catalyst** | | | **allylamine (mg)** | **solvent** | **solvent (g)** | **time (h)** | **allylamine (%)** | **propylamine (%)** |
|---|---|---|---|---|---|---|---|---|---|
| | **metal domplex** | **loading (mg)** | **loading (mol %)** | | | | | | |
| **33a** | RuHCl(PPh₃) ((CH₃OCH₂CH₂)₂Im) (SIMes₂) | 5.0 | 5 | 6.4 | CD₂Cl₂ | 0.681 | 4 | 20 | 80 |
| **33b** | | | | | | | 8 | 7 | 93 |
| **33c** | **(4)** | | | | | | 24 | 0 | 100 |

**Table 10: Series 10 (Hydrogenation of allylalcohol; to demonstrate olefin selectivity); (in all Examples: p = 4 bar and T = 45°C)**

| **Example** | **catalyst** | | | **allylalcohol (mg)** | **solvent** | **solvent (g)** | **time (h)** | **allylalcohol (%)** | **Propanol (%)** |
|---|---|---|---|---|---|---|---|---|---|
| | **metal complex** | **loading (mg)** | **loading (mol%)** | | | | | | |
| **34a** | RuHCl(PPh₃) ((CH₃OCH₂CH₂)₂Im) (SIMes₂) | 5.0 | 5 | 6.5 | CD₂Cl₂ | 0.681 | 4 | 0 | 100 |
| | **(4)** | | | | | | | | |

**Table 11: Series 11 (Hydrogenation of Phenylvinylsulfone; to demonstrate olefin selectivity); (in all Examples: p = 4 bar and T = 45°C)**

| **Example** | **catalyst** | | | **phenylvinyl-sulfone (mg)** | **solvent** | **solvent (g)** | **time (h)** | **phenyl-vinyl-sulfone (%)** | **ethylvinyl-sulfone (%)** |
|---|---|---|---|---|---|---|---|---|---|
| | **metal complex** | **loading (mg)** | **loading (mol %)** | | | | | | |
| **35a** | RuHCl(PPh₃) ((CH₃OCH₂CH₂)₂Im) (SIMes₂) | 5.0 | 5 | 19.0 | CD₂Cl₂ | 0.681 | 4 | 37 | 63 |
| **35b** | | | | | | | 8 | 15 | 85 |
| **35c** | **(4)** | | | | | | 24 | 0 | 100 |

**Table 12: Series 12 (Hydrogenation of 2-vinylpyridine to demonstrate olefin selectivity); (in all Examples: p = 4 bar and T = 45°C)**

| **Example** | **catalyst** | | | **2-vinyl-pyridine (mg)** | **solvent** | **solvent (g)** | **time (h)** | **2-vinyl-pyridine (%)** | **2-ethyl-pyridine (%)** |
|---|---|---|---|---|---|---|---|---|---|
| | **metal complex** | **loading (mg)** | **loading (mol %)** | | | | | | |
| **36a** | RuHCl(PPh₃) ((CH₃OCH₂CH₂)₂Im) (SIMes₂) | 4.45 | 5 | 10.51 | CD₂Cl₂ | 0.681 | 4 | 0 | 100 |
| | **(4)** | | | | | | | | |

**Table 13: Series 13 (Hydrogenation of 1-vinylimidazole to demonstrate olefin selectivity); (in all Examples: p = 4 bar and T = 45°C)**

| **Example** | **catalyst** | | | **1-vinylimidazole (mg)** | **solvent** | **solvent (g)** | **time (h)** | **1-vinylimidazole (%)** | **1-ethylimidazole (%)** |
|---|---|---|---|---|---|---|---|---|---|
| | **metal com plex** | **loading (mg)** | **loading (mol %)** | | | | | | |
| **37a** | RuHCl(PPh₃) ((CH₃OCH₂CH₂)₂Im) (SIMes₂) | 4.45 | 5 | 9.41 | CD₂Cl₂ | 0.681 | 4 | 37 | 63 |
| **37b** | | | | | | | 8 | 5 | 95 |
| **37c** | **(4)** | | | | | | 24 | 0 | 100 |

**Table 14: Series 14 (Hydrogenation of acrylaldehyde to demonstrate olefin selectivity); (in all Examples: p = 4 bar and T = 45°C)**

| **Example** | **catalyst** | | | **acrylaldehyde (mg)** | **solvent** | **solvent (g)** | **time (h)** | **acrylaldehyde (%)** | **propionaldehyde (%)** |
|---|---|---|---|---|---|---|---|---|---|
| | **metal complex** | **loading (mg)** | **loading (mol %)** | | | | | | |
| **38a** | RuHCl(PPh₃) ((CH₃OCH₂CH₂)₂Im) (SIMes₂) | 4.45 | 5 | 5.61 | CD₂Cl₂ | 0.681 | 4 | 37 | 63 |
| **38b** | **(4)** | | | | | | 8 | 0 | 100 |

**Table 15: Series 15 (Hydrogenation of 3-buten-2-one to demonstrate olefin selectivity); (in all Examples: p = 4 bar and T = 45°C)**

| **Example** | **catalyst** | | | **3-buten-2-one (mg)** | **solvent** | **solvent (g)** | **time (h)** | **3-buten-2-one (%)** | **2-butanone (%)** |
|---|---|---|---|---|---|---|---|---|---|
| | **metal complex** | **loading (mg)** | **loading (mol %)** | | | | | | |
| **39a** | RuHCl(PPh₃) ((CH₃OCH₂CH₂)₂Im) (SIMes₂) | 5.0 | 5 | 7.9 | CD₂Cl₂ | 0.681 | 4 | 0 | 100 |
| | **(4)** | | | | | | | | |

**Table 16: Series 16 (Hydrogenation of Phenylvinylthioether to demonstrate olefin selectivity); (in all Examples: p = 4 bar and T = 45°C)**

| **Example** | **catalyst** | | | **phenylvinylthioether (mg)** | **solvent** | **solvent (g)** | **time (h)** | **phenylvinylthioether (%)** | **phenylethylthioether (%)** |
|---|---|---|---|---|---|---|---|---|---|
| | **metal complex** | **loading (mg)** | **loading (mol %)** | | | | | | |
| **40a** | RuHCl(PPh₃) ((CH₃OCH₂CH₂)₂Im) (SIMes₂) | 4.45 | 5 | 13.62 | CD₂Cl₂ | 0.681 | 4 | 39 | 61 |
| **40b** | | | | | | | 8 | 2 | 98 |
| **40c** | **(4)** | | | | | | 24 | 0 | 100 |

**Table 17: Series 17 (Hydrogenation of methyl 3-butenoate to demonstrate olefin selectivity); (in all Examples: p = 4 bar and T = 45°C)**

| **Example** | **catalyst** | | | **methyl 3-butenoate (mg)** | **solvent** | **solvent (g)** | **time (h)** | **methyl-3-butenoate (%)** | **methylbutyrate (%)** |
|---|---|---|---|---|---|---|---|---|---|
| | **metal complex** | **loading (mg)** | **(mol %)** | | | | | | |
| **41a** | RuHCl(PPh₃) ((CH₃OCH₂CH₂)₂Im) (SIMes₂) | 5.0 | 5 | 12.8 | CD₂Cl₂ | 0.681 | 4 | 8 | 92 |
| **41b** | **(4)** | | | | | | 8 | 0 | 100 |

**Table 18: Series 18 (Hydrogenation of 2,3-dimethyl-2-butene to demonstrate olefin selectivity); (in all Examples: p = 4 bar and T = 45°C)**

| **Example** | **catalyst** | | | **2,3-dimethyl- 2-butene (mg)** | **solvent** | **solvent (g)** | **time (h)** | **2,3-dimethyl-2-butene (%)** | **2,3-dimethylbutane (%)** |
|---|---|---|---|---|---|---|---|---|---|
| | **metal complex** | **loading (mg)** | **loading (mol %)** | | | | | | |
| **42a** | RuHCl(PPh₃) ((CH₃OCH₂CH₂)₂Im) (SIMes₂) | 5.0 | 5 | 9.4 | CD₂Cl₂ | 0.681 | 4 | 99 | <1 |
| **42b** | | | | | | | 8 | 99 | <1 |
| **42c** | **(4)** | | | | | | 24 | 99 | <1 |

**Table 19: Series 19 (Hydrogenation of phenylacetylene to demonstrate olefin selectivity); (in all Examples: p = 4 bar and T = 45°C)**

| **Example** | **catalyst** | | | **phenylacetylene (mg)** | **solvent** | **solvent (g)** | **time (h)** | **phenylacetylene (%)** | **styrene [ethylbenzene] (%)** |
|---|---|---|---|---|---|---|---|---|---|
| | **metal complex** | **loading (mg)** | **loading (mol %)** | | | | | | |
| **41a** | RuHCl(PPh₃) ((CH₃OCH₂CH₂)₂Im) (SIMes₂) | 5.0 | 5 | 11. | CD₂Cl₂ | 0.81 | 4 | 0 | 50[50] |
| **41b** | | | | | | | 8 | 0 | 0[100] |
| | **(4)** | | | | | | | | |

## Claims

1. A ruthenium-based complex catalyst according to general formula (I) 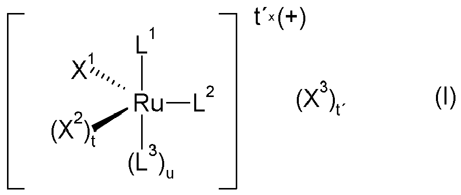 wherein
X¹, X² are identical or different and represent anionic ligands,
X³ represents a non-coordinating anion,
t is either 0 or 1,
t' is either 0 or 1,
u is either 0 or 1, wherein u and t may not both represent 0 at the same time, and
L¹, L², L³ represent identical or different ligands, wherein at least one of L¹, L² and (if u=1) L³ represents either a ligand having the general structure (Ia) or (Ib) 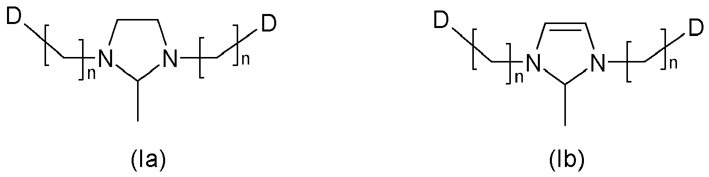 or a ligand having the general structure (Ic) or (Id) 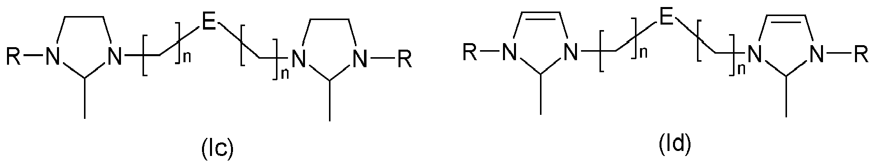 in which formulae (Ia), (Ib), (Ic) and (Id)
n is identical or different and represents an integer in the range of from 1 to 20,
D is identical or different and represents hydroxy, alkoxy, aryloxy, thiol, thiolate, thioether, selenol, selenoether, amine, phosphine, phosphate, phosphite, arsine, sulfoxide, sulfone, alkyl, phosphinimine, aminophosphine, carbene, selenoxide, imidazoline, imidazolidine, phosphine oxide, phosphine sulfide, phosphine selenide, ketone, ester, pyridyl, substituted pyridyl or any moiety able of acting as a two electron donor,
R is identical or different and represents H, alkyl or aryl, and
E is identical or different and represents a divalent moiety able of acting as a two electron donor selected from the group consisting of -O-, -S-, -Se-, -N(R)-, - P(R)-, -As(R)-, -S(=O)-. -PR(=S)-, -PR(=O)-, -C(=O)-, -C(=S)-, 2,6-pyridylene, substituted 2,6-pyridylene and any other divalent moiety able of acting as a two electron donor.

2. The catalyst according to claim 1 in which
X¹, X² are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹, L², and (if u=1) L³ has the general structure according to formulae (Ia) or (Ib), wherein
n is identical or different and represents an integer in the range of from 1 to 20, preferably 1 to 10,
D is identical or different and represents hydroxy, alkoxy, aryloxy, thiol, thiolate, thioether, selenol, selenoether, amine, phosphine, phosphate, arsine, sulfoxide, sulfone, alkyl, phosphinimine, aminophosphine, carbene, selenoxide, imidazoline, imidazolidine, phosphine oxide, phosphine sulfide, phosphine selenide, ketone, ester, pyridyl, substituted pyridyl, or any other moiety able of acting as a two electron donor, preferably D is identical or different and represents C₁-C₂₀-alkoxy, C₆-C₂₄-aryloxy, more preferably C₁-C₁₄-aryloxy, or C₁-C₁₀-thioether, and
with the remainder ligand(s) of L¹, L², and (if u=1) L³ being a ligand/ligands different from the one of formulae (Ia) and (Ib).

3. The catalyst according to claim 1 in which
X¹, X² are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹, L², and (if u=1) L³ has the general structure according to formulae (Ia) or (Ib), wherein
n is identical or different and represents an integer in the range of from 1 to 5,
D is identical or different and represents C₁-C₁₀ alkoxy or C₆-C₁₄ aryloxy,
with the remainder ligand(s) of L¹, L², and (if u=1) L³ being a ligand/ligands different from the one of formulae (Ia) and (Ib), preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃.

4. The catalyst according to claim 1 in which
X¹, X² are different and hydride and halide, preferably chloride.
one ligand of L¹, L², and (if u=1) L³ has the general structure according to formulae (Ia) or (Ib), wherein
n is identical or different and represents an integer in the range of from 1 to 5,
D is identical or different and represents C₁-C₁₀ alkoxy or C₆-C₁₄ aryloxy,
with the remainder ligand(s) of L¹, L², and (if u=1) L³ being a ligand/ligands different from the one of formulae (Ia) and (Ib), preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃.

5. The catalyst according to claim 1 in which
X¹,X² are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹, L², and (if u=1) L³ has the general structure according to formulae (Ia-1) or (Ib-1) 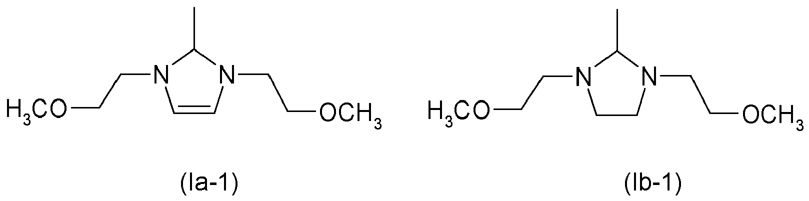 with the remainder ligand(s) of L¹, L², and (if u=1) L³ being a ligand/ligands different from the one of formulae (Ia) and (Ib), preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃.

6. The catalyst according to claim 1 in which
X¹, X² are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹, L², and (if u=1) L³ has the general structure according to formulae (Ic) or (Id) in which
n is identical or different and represents an integer in the range of from 1 to 20, preferably 1 to 10,
R is identical or different and represents H, alkyl or aryl, preferably C₁-C₂₀-alkyl or C₆-C₂₄-aryl,
E is identical or different and represents a divalent moiety able of acting as a two electron donor selected from the group consisting of -O-, -S-, -Se-, -N(R)-, -P(R)-, -As(R)-, - S(=O)-. -PR₃(=S)-, -PR₃(=O)-, -C(=O)-, -C(=S)-, 2,6-pyridylene, substituted 2,6-pyridylene, and any other divalent moiety able of acting as a two electron donor, preferably -O- or -S-,
with the remainder ligand(s) of L¹, L², and (if u=1) L³ being a ligand/ligands different therefrom.

7. The catalyst according to claim 1 in which X¹, X² are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹, L², and (if u=1) L³ has the general structure according to formulae (Ic) or (Id) in which
n is identical or different and represents an integer in the range of from 1 to 5,
R is identical or different and represents C₁-C₁₀ alkyl or C₆-C₂₄ aryl,
E is identical or different and represents oxygen, sulfur,
with the remainder ligand(s) of L¹, L², and (if u=1) L³ being a ligand/ligands different therefrom, preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃.

8. The catalyst according to claim 1 in which
X¹, X² are different and hydride and halide, preferably chloride,
one ligand of L¹, L², and (if u=1) L³ has the general structure according to formulae (Ic) or (Id) in which
n is identical or different and represents an integer in the range of from 1 to 5,
R is identical or different and represents C₁-C₁₀ alkyl or C₆-C₂₄ aryl,
E is identical or different and represents oxygen, sulfur,
with the remainder ligand(s) of L¹, L², and (if u=1) L³ being a ligand/ligands different therefrom, preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃.

9. The catalyst according to claim 1 in which
X¹, X² are identical or different and represent hydride, halide, in particular fluoride, chloride, bromide or iodide, pseudohalide, alkoxide, amide, tosylate, triflate, phosphate, borate, carboxylate, acetate, halogenated acetate, halogenated alkylsulfonate or a weakly coordinating anion,
one ligand of L¹, L², and (if u=1) L³ has the general structure according to formulae (Ic-1) 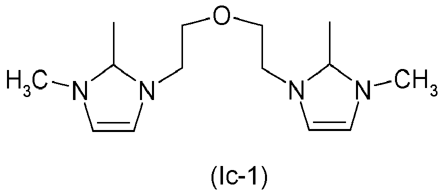 with the remainder ligand(s) of L¹, L², and (if u=1) L³ being a ligand/ligands different therefrom, preferably selected from the group consisting of PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(isopropyl)₃, P(CHCH₃(CH₂CH₃))₃, P(cyclopentyl)₃, P(cyclohexyl)₃, P(neopentyl)₃ and P(benzyl)₃.

10. The catalyst according to any one of claims 1 to 9 in which (i) either u=0 and t=1, or (ii) u=1 and t=0, or (iii) u=1 and t=1.

11. A process for hydrogenating substrates possessing at least one carbon-carbon double bond comprising subjecting said substrate possessing at least one carbon-carbon double bond to a hydrogenation reaction in the presence of a catalyst according to any one of claims 1 to 10.

12. The process according to claim 11, wherein the substrate to be hydrogenated is selected from the group consisting of terminal olefins, internal olefins, cyclic olefins, conjugated olefins, any further olefins having at least one carbon-carbon double bond and additionally at least one further polar unsaturated double or triple bond and polymers having carbon-carbon double bonds.

13. The process according to claim 11, wherein the substrate is selected from the group consisting of hydrocarbon compounds with a terminal unsaturated carbon-carbon double bond having the general formula CₙH₂ₙ, preferably a straight-chain or a branched hydrocarbon compound of any length, more preferably 1-hexene; hydrocarbon compounds with an internal unsaturated carbon-carbon double bond having the general formula CₙH₂ₙ, preferably a straight-chain or branched hydrocarbon compound of any length, more preferably 2-hexene; cyclic hydrocarbon compounds with an unsaturated carbon-carbon double bond having a general formula CₙH₂ₙ₋₂, preferably cyclohexene; hydrocarbon compounds with at least two conjugated unsaturated carbon-carbon double bonds, preferably a straight-chain or a branched hydrocarbon compound with at least two conjugated unsaturated double bonds, more preferably styrene; and olefins having a unsaturated carbon-carbon double bond in the presence of at least one other unsaturated polar bond, preferably olefins with at least one terminal, internal, cyclic or conjugated carbon-carbon double bond and at least one further unsaturated polar bond selected from carbon-nitrogen, carbon-phosphorus, carbon-oxygen, and carbon-sulfur unsaturated polar bonds.

14. The process according to claim 11, wherein the substrate is a polymer having carbon-carbon double bonds which polymer comprises repeating units based on at least one conjugated diene monomer.

15. The process according to claim 14, wherein the substrate is a nitrile rubber comprising repeating units of at least one conjugated diene, at least one α,β-unsaturated nitrile and, if appropriate, one or more further copolymerizable monomers, preferably a nitrile rubber comprising repeating units of at least one conjugated diene selected from the group consisting of 1,3-butadiene, isoprene, 2,3-dimethylbutadiene, piperylene and mixtures thereof, of at least one α,β-unsaturated nitrile selected from the group consisting of acrylonitrile, methacrylonitrile, ethacrylonitrile and mixtures thereof, and optionally of one or more further copolymerizable monomers selected from the group consisting of α,β-unsaturated monocarboxylic, dicarboxylic acids, their esters or amides.
